# EUROPEAN PATENT SPECIFICATION

(11) **EP 3 439 303 B1**
(45) Date of publication and mention of the grant of the patent: **30.12.2020**
(21) Application number: 16900583.2
(22) Date of filing: 05.07.2016
(51) Int. Cl.: H04N 19/105, H04N 19/176, H04N 19/182, H04N 19/91, H04N 19/124, H04N 19/146, H04N 19/517

(54) **INTER PREDICTION MODE-BASED IMAGE PROCESSING METHOD AND APPARATUS THEREFOR**
AUF INTERPRÄDIKTIONSMODUS BASIERENDES BILDVERARBEITUNGSVERFAHREN UND VORRICHTUNG DAFÜR
PROCÉDÉ DE TRAITEMENT D'IMAGE BASÉ SUR UN MODE DE PRÉDICTION INTER ET APPAREIL ASSOCIÉ

(30) Priority: 28.04.2016 US 201662328620 P
(43) Date of publication of application: 06.02.2019
(73) Proprietor: LG Electronics Inc., Seoul 07336 (KR)
(72) Inventor: SEO, Jungdong, Seoul 06772 (KR)
(74) Representative: Maikowski & Ninnemann Patentanwälte Partnerschaft mbB
(86) International application number: PCT/KR2016/007233
(87) International publication number: WO 2017/188509

(56) References cited:
- KR-A- 20120 088 611
- KR-A- 20140 009 955
- KR-A- 20140 136 428
- KR-A- 20150 091 271
- KR-A- 20160 017 012
- STEFFEN KAMP ET AL: "Inter-temporal vector prediction for motion estimation in scalable video coding", INTELLIGENT SIGNAL PROCESSING AND COMMUNICATION SYSTEMS, 2007. ISPACS 2007. INTERNATIONAL SYMPOSIUM ON, IEEE, PI, 1 November 2007 (2007-11-01), pages 586-589, XP031211599, ISBN: 978-1-4244-1446-8
- J-L LIN ET AL: "Improved Advanced Motion Vector Prediction", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-D125, 15 January 2011 (2011-01-15), XP030008165,
- TOURAPIS A M ET AL: "Motion Vector Prediction With Reference Frame Consideration", VISUAL COMMUNICATIONS AND IMAGE PROCESSING; 20-1-2004 - 20-1-2004; SAN JOSE,, vol. 5203, 1 January 2003 (2003-01-01), pages 440-447, XP002550052, DOI: 10.1117/12.507858 ISBN: 978-1-62841-730-2
- ZHOU (TI) M: "non-CE9: Modified H positions for memory bandwidth reduction in TMVP derivation", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G082, 9 November 2011 (2011-11-09), XP030110066,

## Description

### [Technical Field]

The present invention relates to a method of processing a still image or a moving image and, more particularly, to a method of encoding/decoding a still image or a moving image based on an inter-prediction mode and an apparatus supporting the same.

### [Background Art]

Compression encoding means a series of signal processing techniques for transmitting digitized information through a communication line or techniques for storing information in a form suitable for a storage medium. The medium including a picture, an image, audio, etc. may be a target for compression encoding, and particularly, a technique for performing compression encoding on a picture is referred to as video image compression. Methods for motion vector prediction are, for example, described in Kamp et al: "Inter-temporal Vector Prediction for Motion Estimation in Scalable Video Coding", ISPACS 2007 and in Lin et al: "Improved Advanced Motion Vector Prediction", 4. JCT-VC Meeting; 95. MPEG Meeting.

Next-generation video contents are supposed to have the characteristics of high spatial resolution, a high frame rate and high dimensionality of scene representation. In order to process such contents, a drastic increase in the memory storage, memory access rate and processing power will result.

Accordingly, it is required to design a coding tool for processing next-generation video contents efficiently.

### [Disclosure]

### [Technical Problem]

The present invention is concerned with providing a method for defining a reverse motion information predicting method which is a new motion information prediction method in an inter prediction and encoding/decoding an image by using the same.

Furthermore, a method for applying motion information predicted in a reverse direction to a motion information candidate list is provided.

Technical objects to be achieved in the present invention are not limited to the aforementioned technical objects, and other technical objects not described above may be evidently understood by a person having ordinary skill in the art to which the present invention pertains from the following description.

### [Technical Solution]

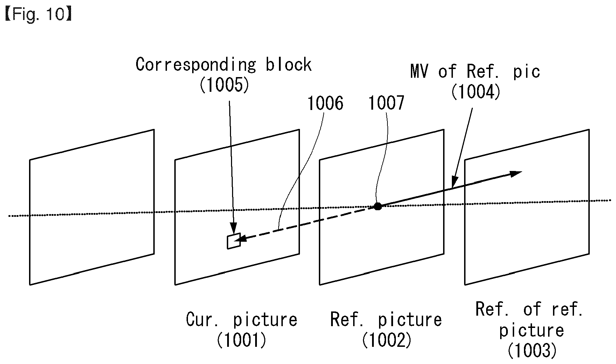

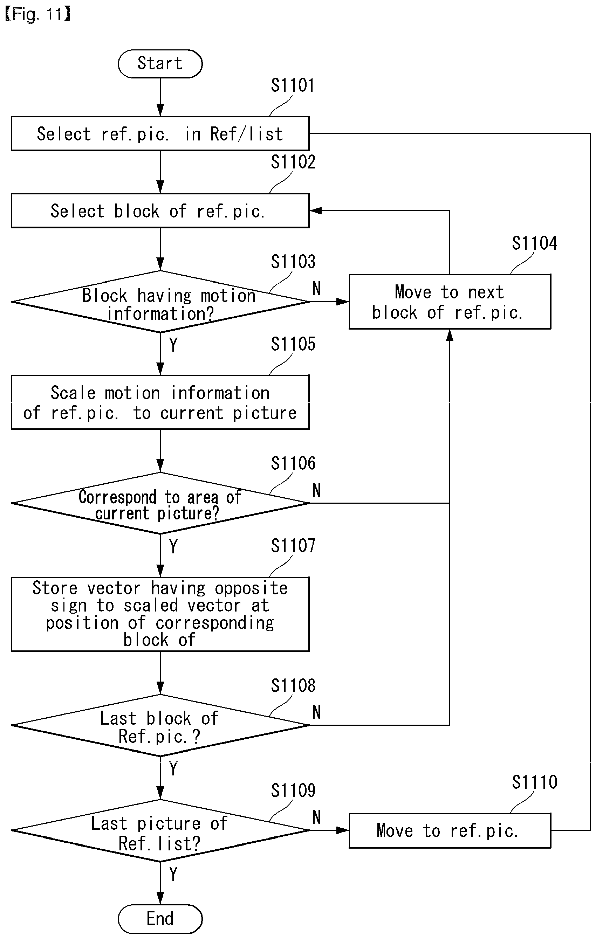

The invention is defined in the appended claims. Enabling disclosure for the invention is found in the embodiment of Figures 10, 11. The remaining embodiments are to be understood as examples useful for understanding, but that do not describe the present invention.

### [Advantageous Effects]

According to the present invention, prediction accuracy can be enhanced by predicting motion information in a reverse direction.

Further, according to the present invention, when reverse motion information is used for a motion information candidate list, neighboring motion information can be used maximally diversifiedly, thereby enhancing coding efficiency.

In addition, according to the present invention, as prediction performance increases, a residual can be reduced, thereby enhancing a compression rate of an image.

Technical effects which may be obtained in the present invention are not limited to the technical effects described above, and other technical effects not mentioned herein may be understood to those skilled in the art from the description below.

### [Description of Drawings]

The accompanying drawings, which are included herein as a part of the description for help understanding the present invention, provide embodiments of the present invention, and describe the technical features of the present invention with the description below.
FIG. 1 is illustrates a schematic block diagram of an encoder in which the encoding of a still image or video signal is performed, as an embodiment to which the present invention is applied.
FIG. 2 illustrates a schematic block diagram of a decoder in which decoding of a still image or video signal is performed, as an embodiment to which the present invention is applied.
FIG. 3 is a diagram for describing a split structure of a coding unit that may be applied to the present invention.
FIG. 4 is a diagram for describing a prediction unit that may be applied to the present invention.
FIG. 5 is an embodiment to which the present invention may be applied and is a diagram illustrating the direction of inter-prediction.
FIG. 6 is an embodiment to which the present invention may be applied and illustrates integers for 1/4 sample interpolation and a fraction sample location.
FIG. 7 is an embodiment to which the present invention may be applied and illustrates the location of a spatial candidate.
FIG. 8 is an embodiment to which the present invention is applied and is a diagram illustrating an inter-prediction method.
FIG. 9 is an embodiment to which the present invention may be applied and is a diagram illustrating a motion compensation process.
FIG. 10 is an embodiment to which the present invention may be applied and is a diagram for describing reverse prediction motion information.
FIG. 11 is an embodiment to which the present invention may be applied and is a diagram for describing reverse prediction motion information.
FIG. 12 is a diagram illustrating a method for determining a priority according to an embodiment of the present invention.
FIG. 13 is a diagram illustrating a method for determining a priority according to an embodiment of the present invention.
FIG. 14 is a diagram illustrating a method for determining a priority according to an embodiment of the present invention.
FIG. 15 is a diagram illustrating a method for determining a priority according to an embodiment of the present invention.
FIG. 16 is a diagram illustrating a method for determining a priority according to an embodiment of the present invention.
FIG. 17 is a diagram for describing a method for generating bidirectional prediction motion information according to an embodiment of the present invention.
FIG. 18 illustrates a schematic block diagram of an encoder including a method for predicting bidirectional motion information according to an embodiment of the present invention.
FIG. 19 illustrates a schematic block diagram of a decoder including a method for predicting bidirectional motion information according to an embodiment of the present invention.
FIG. 20 is an embodiment to which the present invention may be applied and illustrates a method for configuring a motion information candidate list by using reverse motion information.
FIG. 21 is an embodiment to which the present invention may be applied and illustrates a method for configuring a motion information candidate list by using reverse motion information.
FIG. 22 illustrates a method for inserting reverse prediction motion information into a motion information candidate list according to an embodiment of the present invention.
FIG. 23 is a diagram illustrating an inter prediction based image processing method according to an embodiment of the present invention.
FIG. 24 is a diagram illustrating a reverse motion information predicting unit and an inter-prediction unit according to an embodiment of the present invention.

### [Mode for Invention]

Hereinafter, a preferred embodiment of the present invention will be described by reference to the accompanying drawings. The description that will be described below with the accompanying drawings is to describe exemplary embodiments of the present invention, and is not intended to describe the only embodiment in which the present invention may be implemented. The description below includes particular details in order to provide perfect understanding of the present invention. However, it is understood that the present invention may be embodied without the particular details to those skilled in the art.

In some cases, in order to prevent the technical concept of the present invention from being unclear, structures or devices which are publicly known may be omitted, or may be depicted as a block diagram centering on the core functions of the structures or the devices.

Further, although general terms widely used currently are selected as the terms in the present invention as much as possible, a term that is arbitrarily selected by the applicant is used in a specific case. Since the meaning of the term will be clearly described in the corresponding part of the description in such a case, it is understood that the present invention will not be simply interpreted by the terms only used in the description of the present invention, but the meaning of the terms should be figured out.

Specific terminologies used in the description below may be provided to help the understanding of the present invention. Furthermore, the specific terminology may be modified into other forms within the scope of the technical concept of the present invention. For example, a signal, data, a sample, a picture, a frame, a block, etc may be properly replaced and interpreted in each coding process.

Hereinafter, in this specification, a "processing unit" means a unit in which an encoding/decoding processing process, such as prediction, transform and/or quantization, is performed. Hereinafter, for convenience of description, a processing unit may also be called "processing block" or "block."

A processing unit may be construed as having a meaning including a unit for a luma component and a unit for a chroma component. For example, a processing unit may correspond to a coding tree unit (CTU), a coding unit (CU), a prediction unit (PU) or a transform unit (TU).

Furthermore, a processing unit may be construed as being a unit for a luma component or a unit for a chroma component. For example, the processing unit may correspond to a coding tree block (CTB), coding block (CB), prediction block (PB) or transform block (TB) for a luma component. Alternatively, a processing unit may correspond to a coding tree block (CTB), coding block (CB), prediction block (PU) or transform block (TB) for a chroma component. Also, the present invention is not limited to this, and the processing unit may be interpreted to include a unit for the luma component and a unit for the chroma component.

Furthermore, a processing unit is not essentially limited to a square block and may be constructed in a polygon form having three or more vertices.

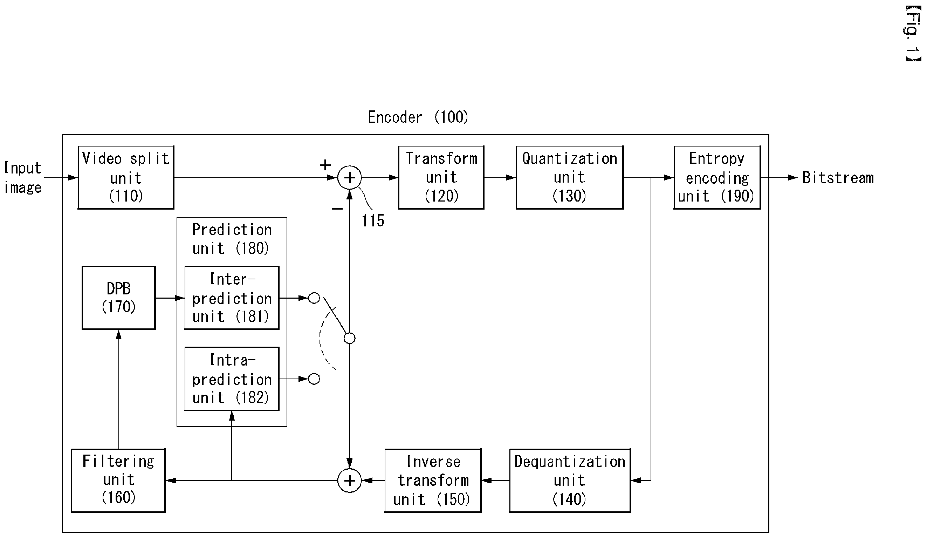

FIG. 1 is illustrates a schematic block diagram of an encoder in which the encoding of a still image or video signal is performed, as an embodiment to which the present invention is applied.

Referring to FIG. 1, the encoder 100 may include a video split unit 110, a subtractor 115, a transform unit 120, a quantization unit 130, a dequantization unit 140, an inverse transform unit 150, a filtering unit 160, a decoded picture buffer (DPB) 170, a prediction unit 180 and an entropy encoding unit 190. Furthermore, the prediction unit 180 may include an inter-prediction unit 181 and an intra-prediction unit 182.

The video split unit 110 splits an input video signal (or picture or frame), input to the encoder 100, into one or more processing units.

The subtractor 115 generates a residual signal (or residual block) by subtracting a prediction signal (or prediction block), output by the prediction unit 180 (i.e., by the inter-prediction unit 181 or the intra-prediction unit 182), from the input video signal. The generated residual signal (or residual block) is transmitted to the transform unit 120.

The transform unit 120 generates transform coefficients by applying a transform scheme (e.g., discrete cosine transform (DCT), discrete sine transform (DST), graph-based transform (GBT) or Karhunen-Loeve transform (KLT)) to the residual signal (or residual block). In this case, the transform unit 120 may generate transform coefficients by performing transform using a prediction mode applied to the residual block and a transform scheme determined based on the size of the residual block.

The quantization unit 130 quantizes the transform coefficient and transmits it to the entropy encoding unit 190, and the entropy encoding unit 190 performs an entropy coding operation of the quantized signal and outputs it as a bit stream.

Meanwhile, the quantized signal outputted by the quantization unit 130 may be used to generate a prediction signal. For example, a residual signal may be reconstructed by applying dequatization and inverse transformation to the quantized signal through the dequantization unit 140 and the inverse transform unit 150. A reconstructed signal may be generated by adding the reconstructed residual signal to the prediction signal output by the inter-prediction unit 181 or the intra-prediction unit 182.

Meanwhile, during such a compression process, neighbor blocks are quantized by different quantization parameters. Accordingly, an artifact in which a block boundary is shown may occur. Such a phenomenon is referred to a blocking artifact, which is one of important factors for evaluating image quality. In order to decrease such an artifact, a filtering process may be performed. Through such a filtering process, the blocking artifact is removed and the error of a current picture is decreased at the same time, thereby improving image quality.

The filtering unit 160 applies filtering to the reconstructed signal, and outputs it through a playback device or transmits it to the decoded picture buffer 170. The filtered signal transmitted to the decoded picture buffer 170 may be used as a reference picture in the inter-prediction unit 181. As described above, an encoding rate as well as image quality can be improved using the filtered picture as a reference picture in an inter-picture prediction mode.

The decoded picture buffer 170 may store the filtered picture in order to use it as a reference picture in the inter-prediction unit 181.

The inter-prediction unit 181 performs temporal prediction and/or spatial prediction with reference to the reconstructed picture in order to remove temporal redundancy and/or spatial redundancy.

In particular, the inter-prediction unit 181 according to the present invention may use backward motion information in inter prediction (or inter picture prediction). A detailed description thereof will be described later.

In this case, a blocking artifact or ringing artifact may occur because a reference picture used to perform prediction is a transformed signal that experiences quantization or dequantization in a block unit when it is encoded/decoded previously.

Accordingly, in order to solve performance degradation attributable to the discontinuity of such a signal or quantization, signals between pixels may be interpolated in a sub-pixel unit by applying a low pass filter to the inter-prediction unit 181. In this case, the sub-pixel means a virtual pixel generated by applying an interpolation filter, and an integer pixel means an actual pixel that is present in a reconstructed picture. A linear interpolation, a bi-linear interpolation, a wiener filter, and the like may be applied as an interpolation method.

The interpolation filter may be applied to the reconstructed picture, and may improve the accuracy of prediction. For example, the inter-prediction unit 181 may perform prediction by generating an interpolation pixel by applying the interpolation filter to the integer pixel and by using the interpolated block including interpolated pixels as a prediction block.

The intra-prediction unit 182 predicts a current block with reference to samples neighboring the block that is now to be encoded. The intra-prediction unit 182 may perform the following procedure in order to perform intra-prediction. First, the intra-prediction unit 182 may prepare a reference sample necessary to generate a prediction signal. Furthermore, the intra-prediction unit 182 may generate a prediction signal using the prepared reference sample. Next, the intra-prediction unit 182 may encode a prediction mode. In this case, the reference sample may be prepared through reference sample padding and/or reference sample filtering. A quantization error may be present because the reference sample experiences the prediction and the reconstruction process. Accordingly, in order to reduce such an error, a reference sample filtering process may be performed on each prediction mode used for the intra-prediction.

The prediction signal (or prediction block) generated through the inter-prediction unit 181 or the intra-prediction unit 182 may be used to generate a reconstructed signal (or reconstructed block) or may be used to generate a residual signal (or residual block).

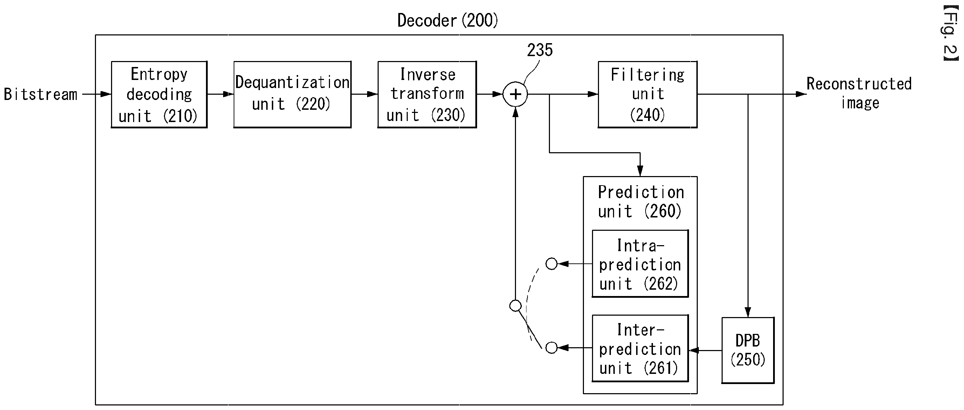

FIG. 2 illustrates a schematic block diagram of a decoder in which decoding of a still image or video signal is performed, as an embodiment to which the present invention is applied.

Referring to FIG. 2, the decoder 200 may include an entropy decoding unit 210, a dequantization unit 220, an inverse transform unit 230, an adder 235, a filtering unit 240, a decoded picture buffer (DPB) 250 and a prediction unit 260. Furthermore, the prediction unit 260 may include an inter-prediction unit 261 and an intra-prediction unit 262.

Furthermore, a reconstructed video signal output through the decoder 200 may be played back through a playback device.

The decoder 200 receives a signal (i.e., bit stream) output by the encoder 100 shown in FIG. 1. The entropy decoding unit 210 performs an entropy decoding operation on the received signal.

The dequantization unit 220 obtains transform coefficients from the entropy-decoded signal using quantization step size information.

The inverse transform unit 230 obtains a residual signal (or residual block) by inverse transforming the transform coefficients by applying an inverse transform scheme.

The adder 235 adds the obtained residual signal (or residual block) to the prediction signal (or prediction block) output by the prediction unit 260 (i.e., the inter-prediction unit 261 or the intra-prediction unit 262), thereby generating a reconstructed signal (or reconstructed block).

The filtering unit 240 applies filtering to the reconstructed signal (or reconstructed block) and outputs the filtered signal to a playback device or transmits the filtered signal to the decoded picture buffer 250. The filtered signal transmitted to the decoded picture buffer 250 may be used as a reference picture in the inter-prediction unit 261.

In this specification, the embodiments described in the filtering unit 160, inter-prediction unit 181 and intra-prediction unit 182 of the encoder 100 may be identically applied to the filtering unit 240, inter-prediction unit 261 and intra-prediction unit 262 of the decoder, respectively.

In particular, the inter-prediction unit 261 according to the present invention may use backward motion information in inter prediction (or inter picture prediction). A detailed description thereof will be described later.

### Processing unit split structure

In general, a block-based image compression method is used in the compression technique (e.g., HEVC) of a still image or a video. The block-based image compression method is a method of processing an image by splitting it into specific block units, and may decrease memory use and a computational load.

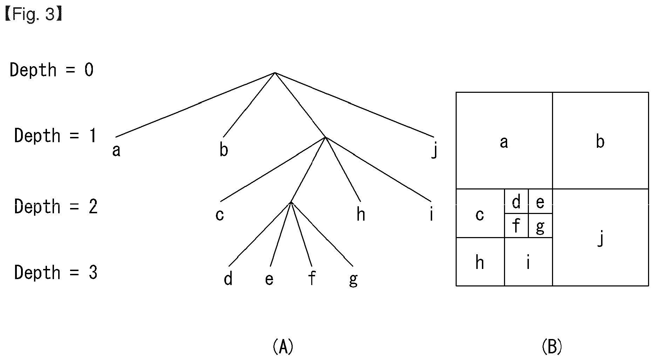

FIG. 3 is a diagram for describing a split structure of a coding unit which may be applied to the present invention.

An encoder splits a single image (or picture) into coding tree units (CTUs) of a quadrangle form, and sequentially encodes the CTUs one by one according to raster scan order.

In HEVC, a size of CTU may be determined as one of 64×64, 32×32, and 16×16. The encoder may select and use the size of a CTU based on resolution of an input video signal or the characteristics of input video signal. The CTU includes a coding tree block (CTB) for a luma component and the CTB for two chroma components that correspond to it.

One CTU may be split in a quad-tree structure. That is, one CTU may be split into four units each having a square form and having a half horizontal size and a half vertical size, thereby being capable of generating coding units (CUs). Such splitting of the quad-tree structure may be recursively performed. That is, the CUs are hierarchically split from one CTU in the quad-tree structure.

A CU means a basic unit for the processing process of an input video signal, for example, coding in which intra/inter prediction is performed. A CU includes a coding block (CB) for a luma component and a CB for two chroma components corresponding to the luma component. In HEVC, a CU size may be determined as one of 64x64, 32x32, 16×16, and 8×8.

Referring to FIG. 3, the root node of a quad-tree is related to a CTU. The quad-tree is split until a leaf node is reached. The leaf node corresponds to a CU.

This is described in more detail. The CTU corresponds to the root node and has the smallest depth (i.e., depth=0) value. A CTU may not be split depending on the characteristics of an input video signal. In this case, the CTU corresponds to a CU.

A CTU may be split in a quad-tree form. As a result, lower nodes, that is, a depth 1 (depth=1), are generated. Furthermore, a node (i.e., leaf node) that belongs to the lower nodes having the depth of 1 and that is no longer split corresponds to a CU. For example, in FIG. 3(b), a CU(a), a CU(b) and a CU(j) corresponding to nodes a, b and j have been once split from the CTU, and have a depth of 1.

At least one of the nodes having the depth of 1 may be split in a quad-tree form. As a result, lower nodes having a depth 1 (i.e., depth=2) are generated. Furthermore, a node (i.e., leaf node) that belongs to the lower nodes having the depth of 2 and that is no longer split corresponds to a CU. For example, in FIG. 3(b), a CU(c), a CU(h) and a CU(i) corresponding to nodes c, h and i have been twice split from the CTU, and have a depth of 2.

Furthermore, at least one of the nodes having the depth of 2 may be split in a quad-tree form again. As a result, lower nodes having a depth 3 (i.e., depth=3) are generated. Furthermore, a node (i.e., leaf node) that belongs to the lower nodes having the depth of 3 and that is no longer split corresponds to a CU. For example, in FIG. 3(b), a CU(d), a CU(e), a CU(f) and a CU(g) corresponding to nodes d, e, f and g have been three times split from the CTU, and have a depth of 3.

In the encoder, a maximum size or minimum size of a CU may be determined based on the characteristics of a video image (e.g., resolution) or by considering the encoding rate. Furthermore, information about the maximum or minimum size or information capable of deriving the information may be included in a bit stream. A CU having a maximum size is referred to as the largest coding unit (LCU), and a CU having a minimum size is referred to as the smallest coding unit (SCU).

In addition, a CU having a tree structure may be hierarchically split with predetermined maximum depth information (or maximum level information). Furthermore, each split CU may have depth information. Since the depth information represents a split count and/or degree of a CU, it may include information about the size of a CU.

Since the LCU is split in a Quad-tree shape, the size of SCU may be obtained by using a size of LCU and the maximum depth information. Or, inversely, the size of LCU may be obtained by using a size of SCU and the maximum depth information of the tree.

For a single CU, the information (e.g., a split CU flag (split_cu_flag)) that represents whether the corresponding CU is split may be forwarded to the decoder. This split information is included in all CUs except the SCU. For example, when the value of the flag that represents whether to split is '1', the corresponding CU is further split into four CUs, and when the value of the flag that represents whether to split is '0', the corresponding CU is not split any more, and the processing process for the corresponding CU may be performed.

As described above, a CU is a basic unit of the coding in which the intra-prediction or the inter-prediction is performed. The HEVC splits the CU in a prediction unit (PU) for coding an input video signal more effectively.

A PU is a basic unit for generating a prediction block, and even in a single CU, the prediction block may be generated in different way by a unit of PU. However, the intra-prediction and the inter-prediction are not used together for the PUs that belong to a single CU, and the PUs that belong to a single CU are coded by the same prediction method (i.e., the intra-prediction or the inter-prediction).

A PU is not split in the Quad-tree structure, but is split once in a single CU in a predetermined shape. This will be described by reference to the drawing below.

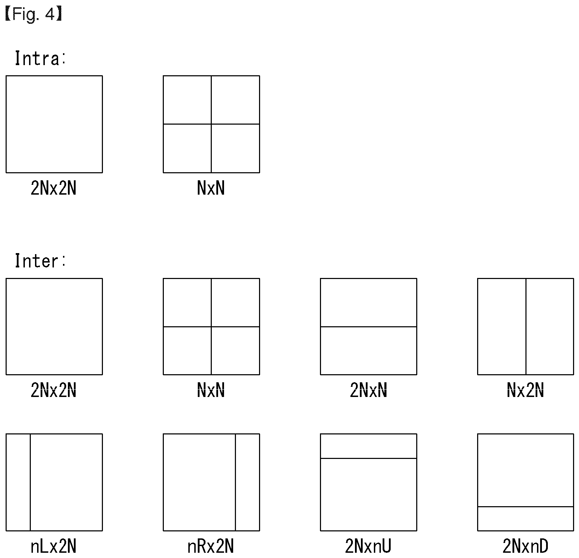

FIG. 4 is a diagram for describing a prediction unit that may be applied to the present invention.

A PU is differently split depending on whether the intra-prediction mode is used or the inter-prediction mode is used as the coding mode of the CU to which the PU belongs.

FIG. 4(a) illustrates a PU if the intra-prediction mode is used, and FIG. 4(b) illustrates a PU if the inter-prediction mode is used.

Referring to FIG. 4(a), assuming that the size of a single CU is 2N×2N (N = 4, 8, 16 and 32), the single CU may be split into two types (i.e., 2N×2N or N×N).

In this case, if a single CU is split into the PU of 2Nx2N shape, it means that only one PU is present in a single CU.

Meanwhile, if a single CU is split into the PU of N×N shape, a single CU is split into four PUs, and different prediction blocks are generated for each PU unit. However, such PU splitting may be performed only if the size of CB for the luma component of CU is the minimum size (i.e., the case that a CU is an SCU).

Referring to FIG. 4(b), assuming that the size of a single CU is 2N×2N (N = 4, 8, 16 and 32), a single CU may be split into eight PU types (i.e., 2N×2N, N×N, 2NxN, Nx2N, nLx2N, nRx2N, 2NxnU and 2NxnD)

As in the intra-prediction, the PU split of NxN shape may be performed only if the size of CB for the luma component of CU is the minimum size (i.e., the case that a CU is an SCU).

The inter-prediction supports the PU split in the shape of 2N×N that is split in a horizontal direction and in the shape of Nx2N that is split in a vertical direction.

In addition, the inter-prediction supports the PU split in the shape of nL×2N, nR×2N, 2N×nU and 2N×nD, which is an asymmetric motion split (AMP). In this case, 'n' means 1/4 value of 2N. However, the AMP may not be used if the CU to which the PU is belonged is the CU of minimum size.

In order to encode the input video signal in a single CTU efficiently, the optimal split structure of the coding unit (CU), the prediction unit (PU) and the transform unit (TU) may be determined based on a minimum rate-distortion value through the processing process as follows. For example, as for the optimal CU split process in a 64x64 CTU, the rate-distortion cost may be calculated through the split process from a CU of 64×64 size to a CU of 8×8 size. The detailed process is as follows.
1) The optimal split structure of a PU and TU that generates the minimum rate distortion value is determined by performing inter/intra-prediction, transformation/quantization, dequantization/inverse transformation and entropy encoding on the CU of 64×64 size.
2) The optimal split structure of a PU and TU is determined to split the 64×64 CU into four CUs of 32x32 size and to generate the minimum rate distortion value for each 32×32 CU.
3) The optimal split structure of a PU and TU is determined to further split the 32x32 CU into four CUs of 16x16 size and to generate the minimum rate distortion value for each 16×16 CU.
4) The optimal split structure of a PU and TU is determined to further split the 16×16 CU into four CUs of 8×8 size and to generate the minimum rate distortion value for each 8×8 CU.
5) The optimal split structure of a CU in the 16x16 block is determined by comparing the rate-distortion value of the 16x16 CU obtained in the process 3) with the addition of the rate-distortion value of the four 8x8 CUs obtained in the process 4). This process is also performed for remaining three 16×16 CUs in the same manner.
6) The optimal split structure of CU in the 32×32 block is determined by comparing the rate-distortion value of the 32x32 CU obtained in the process 2) with the addition of the rate-distortion value of the four 16x16 CUs that is obtained in the process 5). This process is also performed for remaining three 32×32 CUs in the same manner.
7) Finally, the optimal split structure of CU in the 64x64 block is determined by comparing the rate-distortion value of the 64x64 CU obtained in the process 1) with the addition of the rate-distortion value of the four 32x32 CUs obtained in the process 6).

In the intra-prediction mode, a prediction mode is selected as a PU unit, and prediction and reconstruction are performed on the selected prediction mode in an actual TU unit.

A TU means a basic unit in which actual prediction and reconstruction are performed. A TU includes a transform block (TB) for a luma component and a TB for two chroma components corresponding to the luma component.

In the example of FIG. 3, as in an example in which one CTU is split in the quad-tree structure to generate a CU, a TU is hierarchically split from one CU to be coded in the quad-tree structure.

TUs split from a CU may be split into smaller and lower TUs because a TU is split in the quad-tree structure. In HEVC, the size of a TU may be determined to be as one of 32×32, 16×16, 8×8 and 4×4.

Referring back to FIG. 3, the root node of a quad-tree is assumed to be related to a CU. The quad-tree is split until a leaf node is reached, and the leaf node corresponds to a TU.

This is described in more detail. A CU corresponds to a root node and has the smallest depth (i.e., depth=0) value. A CU may not be split depending on the characteristics of an input image. In this case, the CU corresponds to a TU.

A CU may be split in a quad-tree form. As a result, lower nodes having a depth 1 (depth=1) are generated. Furthermore, a node (i.e., leaf node) that belongs to the lower nodes having the depth of 1 and that is no longer split corresponds to a TU. For example, in FIG. 3(b), a TU(a), a TU(b) and a TU(j) corresponding to the nodes a, b and j are once split from a CU and have a depth of 1.

At least one of the nodes having the depth of 1 may be split in a quad-tree form again. As a result, lower nodes having a depth 2 (i.e., depth=2) are generated. Furthermore, a node (i.e., leaf node) that belongs to the lower nodes having the depth of 2 and that is no longer split corresponds to a TU. For example, in FIG. 3(b), a TU(c), a TU(h) and a TU(i) corresponding to the node c, h and I have been split twice from the CU and have the depth of 2.

Furthermore, at least one of the nodes having the depth of 2 may be split in a quad-tree form again. As a result, lower nodes having a depth 3 (i.e., depth=3) are generated. Furthermore, a node (i.e., leaf node) that belongs to the lower nodes having the depth of 3 and that is no longer split corresponds to a CU. For example, in FIG. 3(b), a TU(d), a TU(e), a TU(f) and a TU(g) corresponding to the nodes d, e, f and g have been three times split from the CU and have the depth of 3.

A TU having a tree structure may be hierarchically split with predetermined maximum depth information (or maximum level information). Furthermore, each spit TU may have depth information. The depth information may include information about the size of the TU because it indicates the split number and/or degree of the TU.

Information (e.g., a split TU flag "split_transform_flag") indicating whether a corresponding TU has been split with respect to one TU may be transferred to the decoder. The split information is included in all of TUs other than a TU of a minimum size. For example, if the value of the flag indicating whether a TU has been split is "1", the corresponding TU is split into four TUs. If the value of the flag indicating whether a TU has been split is "0", the corresponding TU is no longer split.

### Prediction

In order to reconstruct a current processing unit on which decoding is performed, the decoded part of a current picture or other pictures including the current processing unit may be used.

A picture (slice) using only a current picture for reconstruction, that is, on which only intra-prediction is performed, may be called an intra-picture or I picture (slice), a picture (slice) using a maximum of one motion vector and reference index in order to predict each unit may be called a predictive picture or P picture (slice), and a picture (slice) using a maximum of two motion vector and reference indices may be called a bi-predictive picture or B a picture (slice).

Intra-prediction means a prediction method of deriving a current processing block from the data element (e.g., a sample value) of the same decoded picture (or slice). That is, intra-prediction means a method of predicting the pixel value of a current processing block with reference to reconstructed regions within a current picture.

Hereinafter, inter-prediction is described in more detail.

### Inter-prediction (or inter-frame prediction)

Inter-prediction means a prediction method of deriving a current processing block based on the data element (e.g., sample value or motion vector) of a picture other than a current picture. That is, inter-prediction means a method of predicting the pixel value of a current processing block with reference to reconstructed regions within another reconstructed picture other than a current picture.

Inter-prediction (or inter-picture prediction) is a technology for removing redundancy present between pictures and is chiefly performed through motion estimation and motion compensation.

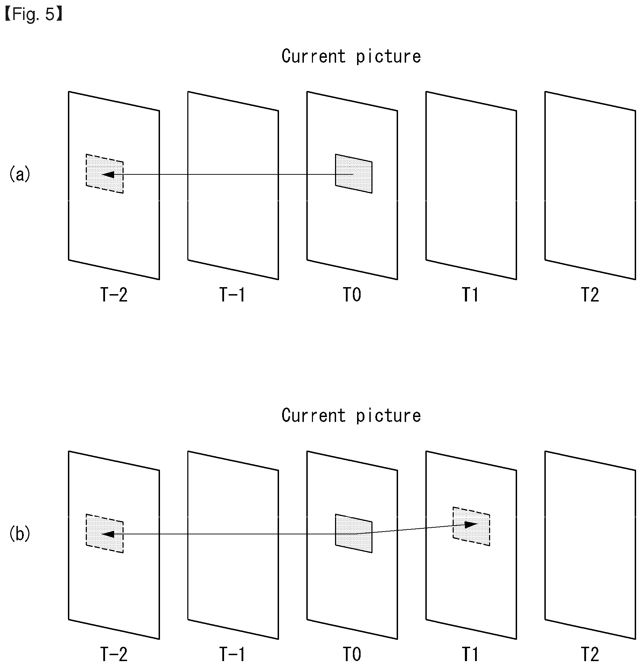

FIG. 5 is an embodiment to which the present invention may be applied and is a diagram illustrating the direction of inter-prediction.

Referring to FIG. 5, inter-prediction may be divided into uni-direction prediction in which only one past picture or future picture is used as a reference picture on a time axis with respect to a single block and bi-directional prediction in which both the past and future pictures are referred at the same time.

Furthermore, the uni-direction prediction may be divided into forward direction prediction in which a single reference picture temporally displayed (or output) prior to a current picture is used and backward direction prediction in which a single reference picture temporally displayed (or output) after a current picture is used.

In the inter-prediction process (i.e., uni-direction or bi-directional prediction), a motion parameter (or information) used to specify which reference region (or reference block) is used in predicting a current block includes an inter-prediction mode (in this case, the inter-prediction mode may indicate a reference direction (i.e., uni-direction or bidirectional) and a reference list (i.e., L0, L1 or bidirectional)), a reference index (or reference picture index or reference list index), and motion vector information. The motion vector information may include a motion vector, motion vector prediction (MVP) or a motion vector difference (MVD). The motion vector difference means a difference between a motion vector and a motion vector predictor.

In the uni-direction prediction, a motion parameter for one-side direction is used. That is, one motion parameter may be necessary to specify a reference region (or reference block).

In the bi-directional prediction, a motion parameter for both directions is used. In the bi-directional prediction method, a maximum of two reference regions may be used. The two reference regions may be present in the same reference picture or may be present in different pictures. That is, in the bi-directional prediction method, a maximum of two motion parameters may be used. Two motion vectors may have the same reference picture index or may have different reference picture indices. In this case, the reference pictures may be displayed temporally prior to a current picture or may be displayed (or output) temporally after a current picture.

The encoder performs motion estimation in which a reference region most similar to a current processing block is searched for in reference pictures in an inter-prediction process. Furthermore, the encoder may provide the decoder with a motion parameter for a reference region.

The encoder/decoder may obtain the reference region of a current processing block using a motion parameter. The reference region is present in a reference picture having a reference index. Furthermore, the pixel value or interpolated value of a reference region specified by a motion vector may be used as the predictor of a current processing block. That is, motion compensation in which an image of a current processing block is predicted from a previously decoded picture is performed using motion information.

In order to reduce the transfer rate related to motion vector information, a method of obtaining a motion vector predictor (mvd) using motion information of previously decoded blocks and transmitting only the corresponding difference (mvd) may be used. That is, the decoder calculates the motion vector predictor of a current processing block using motion information of other decoded blocks and obtains a motion vector value for the current processing block using a difference from the encoder. In obtaining the motion vector predictor, the decoder may obtain various motion vector candidate values using motion information of other already decoded blocks, and may obtain one of the various motion vector candidate values as a motion vector predictor.

### - Reference picture set and reference picture list

In order to manage multiple reference pictures, a set of previously decoded pictures are stored in the decoded picture buffer (DPB) for the decoding of the remaining pictures.

A reconstructed picture that belongs to reconstructed pictures stored in the DPB and that is used for inter-prediction is called a reference picture. In other words, a reference picture means a picture including a sample that may be used for inter-prediction in the decoding process of a next picture in a decoding sequence.

A reference picture set (RPS) means a set of reference pictures associated with a picture, and includes all of previously associated pictures in the decoding sequence. A reference picture set may be used for the inter-prediction of an associated picture or a picture following a picture in the decoding sequence. That is, reference pictures retained in the decoded picture buffer (DPB) may be called a reference picture set. The encoder may provide the decoder with a sequence parameter set (SPS) (i.e., a syntax structure having a syntax element) or reference picture set information in each slice header.

A reference picture list means a list of reference pictures used for the inter-prediction of a P picture (or slice) or a B picture (or slice). In this case, the reference picture list may be divided into two reference pictures lists, which may be called a reference picture list 0 (or L0) and a reference picture list 1 (or L1). Furthermore, a reference picture belonging to the reference picture list 0 may be called a reference picture 0 (or L0 reference picture), and a reference picture belonging to the reference picture list 1 may be called a reference picture 1 (or L1 reference picture).

In the decoding process of the P picture (or slice), one reference picture list (i.e., the reference picture list 0). In the decoding process of the B picture (or slice), two reference pictures lists (i.e., the reference picture list 0 and the reference picture list 1) may be used. Information for distinguishing between such reference picture lists for each reference picture may be provided to the decoder through reference picture set information. The decoder adds a reference picture to the reference picture list 0 or the reference picture list 1 based on reference picture set information.

In order to identify any one specific reference picture within a reference picture list, a reference picture index (or reference index) is used.

### - Fractional sample interpolation

A sample of a prediction block for an inter-predicted current processing block is obtained from the sample value of a corresponding reference region within a reference picture identified by a reference picture index. In this case, a corresponding reference region within a reference picture indicates the region of a location indicated by the horizontal component and vertical component of a motion vector. Fractional sample interpolation is used to generate a prediction sample for non-integer sample coordinates except a case where a motion vector has an integer value. For example, a motion vector of 1/4 scale of the distance between samples may be supported.

In the case of HEVC, fractional sample interpolation of a luma component applies an 8 tab filter in the traverse direction and longitudinal direction. Furthermore, the fractional sample interpolation of a chroma component applies a 4 tab filter in the traverse direction and the longitudinal direction.

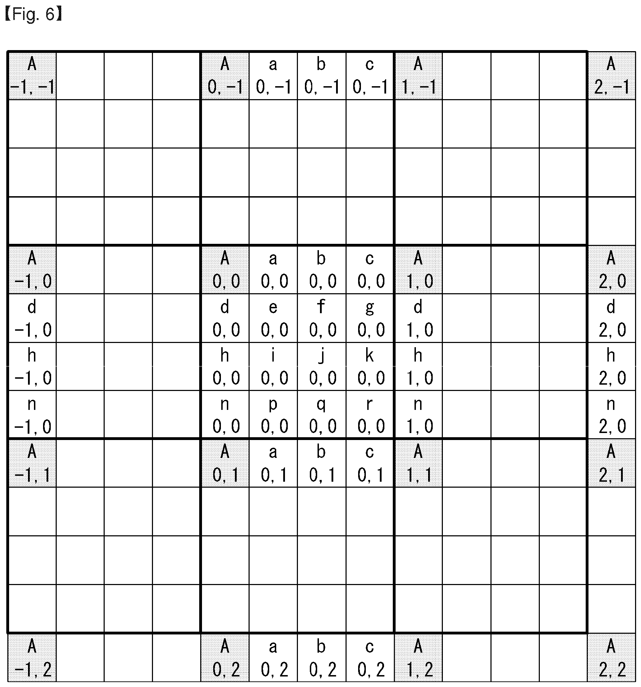

FIG. 6 is an embodiment to which the present invention may be applied and illustrates integers for 1/4 sample interpolation and a fraction sample locations.

Referring to FIG. 6, a shadow block in which an upper-case letter (A_i,j) is written indicates an integer sample location, and a block not having a shadow in which a lower-case letter (x_i,j) is written indicates a fraction sample location.

A fraction sample is generated by applying an interpolation filter to an integer sample value in the horizontal direction and the vertical direction. For example, in the case of the horizontal direction, the 8 tab filter may be applied to four integer sample values on the left side and four integer sample values on the right side based on a fraction sample to be generated.

### - Inter-prediction mode

In HEVC, in order to reduce the amount of motion information, a merge mode and advanced motion vector prediction (AMVP) may be used.

### 1) Merge mode

The merge mode means a method of deriving a motion parameter (or information) from a spatially or temporally neighbor block.

In the merge mode, a set of available candidates includes spatially neighboring candidates, temporal candidates and generated candidates.

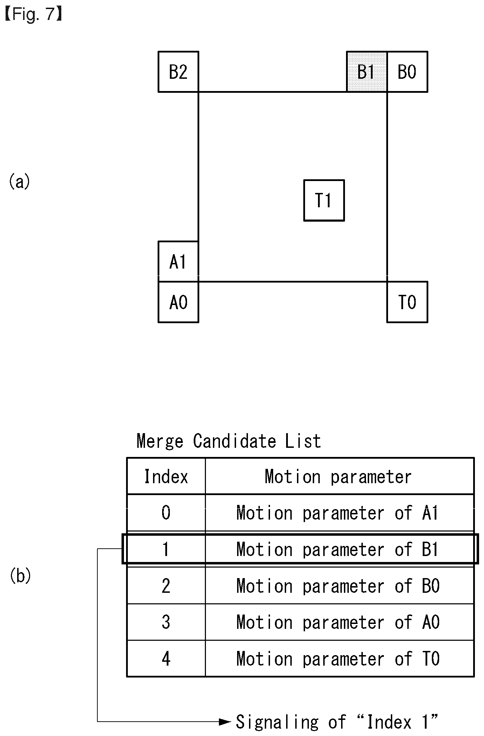

FIG. 7 is an embodiment to which the present invention may be applied and illustrates the location of a spatial candidate.

Referring to FIG. 7(a), whether each spatial candidate block is available depending on the sequence of {A1, B1, B0, A0, B2} is determined. In this case, if a candidate block is not encoded in the intra-prediction mode and motion information is present or if a candidate block is located out of a current picture (or slice), the corresponding candidate block cannot be used.

After the validity of a spatial candidate is determined, a spatial merge candidate may be configured by excluding an unnecessary candidate block from the candidate block of a current processing block. For example, if the candidate block of a current prediction block is a first prediction block within the same coding block, candidate blocks having the same motion information other than a corresponding candidate block may be excluded.

When the spatial merge candidate configuration is completed, a temporal merge candidate configuration process is performed in order of {T0, T1}.

In a temporal candidate configuration, if the right bottom block TO of a collocated block of a reference picture is available, the corresponding block is configured as a temporal merge candidate. The collocated block means a block present in a location corresponding to a current processing block in a selected reference picture. In contrast, if not, a block T1 located at the center of the collocated block is configured as a temporal merge candidate.

A maximum number of merge candidates may be specified in a slice header. If the number of merge candidates is greater than the maximum number, a spatial candidate and temporal candidate having a smaller number than the maximum number are maintained. If not, the number of additional merge candidates (i.e., combined bi-predictive merging candidates) is generated by combining candidates added so far until the number of candidates becomes the maximum number.

The encoder configures a merge candidate list using the above method, and signals candidate block information, selected in a merge candidate list by performing motion estimation, to the decoder as a merge index (e.g., merge_idx[x0][y0]'). FIG. 7(b) illustrates a case where a B1 block has been selected from the merge candidate list. In this case, an "index 1 (Index 1)" may be signaled to the decoder as a merge index.

The decoder configures a merge candidate list like the encoder, and derives motion information about a current prediction block from motion information of a candidate block corresponding to a merge index from the encoder in the merge candidate list. Furthermore, the decoder generates a prediction block for a current processing block based on the derived motion information (i.e., motion compensation).

### 2) Advanced motion vector prediction (AMVP) mode

The AMVP mode means a method of deriving a motion vector prediction value from a neighbor block. Accordingly, a horizontal and vertical motion vector difference (MVD), a reference index and an inter-prediction mode are signaled to the decoder. Horizontal and vertical motion vector values are calculated using the derived motion vector prediction value and a motion vector difference (MVDP) provided by the encoder.

That is, the encoder configures a motion vector predictor candidate list, and signals a motion reference flag (i.e., candidate block information) (e.g., mvp_IX_flag[x0][y0]'), selected in motion vector predictor candidate list by performing motion estimation, to the decoder. The decoder configures a motion vector predictor candidate list like the encoder, and derives the motion vector predictor of a current processing block using motion information of a candidate block indicated by a motion reference flag received from the encoder in the motion vector predictor candidate list. Furthermore, the decoder obtains a motion vector value for the current processing block using the derived motion vector predictor and a motion vector difference transmitted by the encoder. Furthermore, the decoder generates a prediction block for the current processing block based on the derived motion information (i.e., motion compensation).

In the case of the AMVP mode, two spatial motion candidates of the five available candidates in FIG. 7 are selected. The first spatial motion candidate is selected from a {A0, A1} set located on the left side, and the second spatial motion candidate is selected from a {B0, B1, B2} set located at the top. In this case, if the reference index of a neighbor candidate block is not the same as a current prediction block, a motion vector is scaled.

If the number of candidates selected as a result of search for spatial motion candidates is 2, a candidate configuration is terminated. If the number of selected candidates is less than 2, a temporal motion candidate is added.

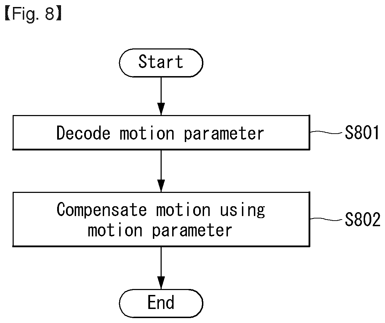

FIG. 8 is an embodiment to which the present invention is applied and is a diagram illustrating an inter-prediction method.

Referring to FIG. 8, the decoder (in particular, the inter-prediction unit 261 of the decoder in FIG. 2) decodes a motion parameter for a processing block (e.g., a prediction unit) (S801).

For example, if the merge mode has been applied to the processing block, the decoder may decode a merge index signaled by the encoder. Furthermore, the motion parameter of the current processing block may be derived from the motion parameter of a candidate block indicated by the merge index.

Furthermore, if the AMVP mode has been applied to the processing block, the decoder may decode a horizontal and vertical motion vector difference (MVD), a reference index and an inter-prediction mode signaled by the encoder. Furthermore, the decoder may derive a motion vector predictor from the motion parameter of a candidate block indicated by a motion reference flag, and may derive the motion vector value of a current processing block using the motion vector predictor and the received motion vector difference.

The decoder performs motion compensation on a prediction unit using the decoded motion parameter (or information) (S802).

That is, the encoder/decoder perform motion compensation in which an image of a current unit is predicted from a previously decoded picture using the decoded motion parameter.

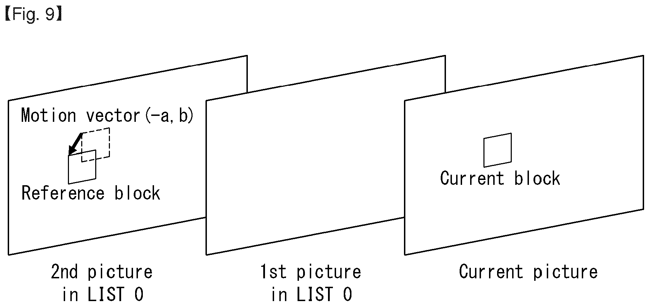

FIG. 9 is an embodiment to which the present invention may be applied and is a diagram illustrating a motion compensation process.

FIG. 9 illustrates a case where a motion parameter for a current block to be encoded in a current picture is uni-direction prediction, a second picture within LIST0, LIST0, and a motion vector (-a, b).

In this case, as in FIG. 9, the current block is predicted using the values (i.e., the sample values of a reference block) of a location (-a, b) spaced apart from the current block in the second picture of LIST0.

In the case of bi-directional prediction, another reference list (e.g., LIST1), a reference index and a motion vector difference are transmitted. The decoder derives two reference blocks and predicts a current block value based on the two reference blocks.

### Reverse motion information predicting method

The present invention proposes a method for encoding/decoding an image by predicting motion information in a reverse direction in order to enhance accuracy of prediction of inter-picture prediction (i.e., inter prediction). In particular, the present invention proposes a method for determining a priority of motion information predicted in the reverse rd direction. Further, the present invention proposes a method for applying the motion information predicted in the reverse direction to a motion information candidate list.

The reverse motion information predicting method means a method that uses motion information of a reference picture which exists in a reference list for predicting motion information of a current picture.

A reverse motion vector (or reverse prediction motion vector) may refer to a vector from a random position in the current picture to a random position in the reference picture, which is derived from a motion vector at the random position in the reference picture.

Reverse motion information (or reverse prediction motion information) may include the reverse motion vector and/or reference picture information (including, for example, reference picture list and/or reference picture index). Hereinafter, they will be described with reference to following drawing.

FIG. 10 is an embodiment to which the present invention may be applied and is a diagram for describing reverse prediction motion information.

Referring to FIG. 10, an encoder/decoder may first select a reference picture 1002 in a reference picture list of a current picture 1001 in order to perform reverse motion information prediction.

The encoder/decoder may project a motion vector 1004 of a random position 1007 in the reference picture 1002 to the current picture 1001. In other words, the encoder/decoder may scale the motion vector 1004 of the random position 1007 in the reference picture 1002 and transform the scaled motion vector to a vector 1006 which is toward the current picture 1001.

That is, the scaled motion vector (or scaled motion information) 1006 may mean a vector (that is, a vector in which the reference picture 1002 refers to the current picture 1001) to the random position in the current picture 1001 from the random position 1007 in the reference picture 1002 acquired by scaling the motion vector 1004 of the random position 1007 in the reference picture 1002.

As such, a process of projecting the motion vector 1004 at the random position 1007 in the reference picture 1002 to the current picture 1001 may adopt a scaling operation of the motion vector.

For example, the scaled motion vector 1006 may be calculated through vector scaling based on a picture order count (POC) difference between the current picture 1001 and the reference picture 1002 and a POC difference between the reference picture 1002 and a reference picture 1003 of the reference picture 1002.

FIG. 10 illustrates one example for describing the reference motion vector (or reverse motion information) and the reference picture 1003 of the reference picture 1002 may be positioned between the current picture 1001 and the reference picture 1002. In this case, unlike the example in FIG. 10, the motion vector 1004 at the random position 1007 in the reference picture 1002 and the scaled motion vector 1006 may have the same sign (that is, vectors which are different in size, but the same in direction).

As such, a position corresponding to the random position 1007 of the reference picture 1002 may be obtained in the current picture by using the vector 1006 in which the reference picture 1002 refers to the current picture 1001 and the position may be defined as a corresponding block 1005.

In other words, the corresponding block 1005 may refer to a block 1005 within the current picture 1001 that is identified by the scaled motion vector 1006.

A motion vector (i.e., a reverse motion vector) directed to the random position 1007 of the reference picture 1002 in the corresponding block 1005 of the current picture 1001 is a vector which takes an opposite sign of each component of the vector (i.e., scaled motion vector) 1006 obtained through scaling and index information for the vector and the reference list for the reference picture may be defined as the reverse motion information.

An encoder/decoder takes the opposite sign for each component of the scaled motion vector 1006 to derive the reverse motion vector (i.e., a vector which is the same in size and reverse in direction as the scaled motion vector 1006) which is directed to the block 1007 within the reference picture 1002 from the corresponding block 1005.

The encoder/decoder may perform the above-described reverse motion information prediction while searching all areas within the reference picture 1002.

The encoder/decoder may skip the reverse motion information prediction (that is, may another area within the reference picture 1002) when the random position 1007 of the reference picture 1002 does not have the motion information 1004 (for example, encoded/decoded by the inter-picture prediction (or intra prediction).

Further, the encoder/decoder may perform the above-described reverse motion information prediction with respect to all reference pictures which exist within the reference picture list of the current picture 1001. A reverse motion information predicting process will be described with reference to the following drawing.

FIG. 11 is an embodiment to which the present invention may be applied and is a diagram for describing reverse prediction motion information.

In the description of the present invention, the reverse motion information predicting process is described with reference to FIG. 11 for convenience of description, but a motion information predicting process is not limited thereto.

Referring to FIG. 11, the encoder/decoder selects the reference picture in the reference picture list of the current picture (S1101).

The encoder/decoder selects the reference picture and then selects a random block in the selected reference picture (S1102). In this case, the encoder/decoder may select the random block within the selected reference picture by using various scan schemes.

For example, the random block may be selected within the reference picture by using scan schemes including a raster scan, an up-right diagonal scan, a vertical scan, a horizontal scan, and the like.

After selecting the random block within the reference picture, the encoder/decoder determines whether the block within the selected reference picture is a block having motion information (S1103).

As a result of determining whether the block within the selected reference picture is the block having the motion information in step S1103, when the block within the selected reference picture is not the block having the motion information, the encoder/decoder moves to a next block of the selected block within the reference picture (S1104).

On the contrary, as the result of determining whether the block within the selected reference picture is the block having the motion information in step S1103, when the block within the selected reference picture is the block having the motion information, the encoder/decoder scales the motion information of the block within the reference picture to be directed to the current picture (S1105).

That is, when the block in the reference picture is the block having the motion information, the encoder/decoder may calculate the vector in the direction in which the reference picture refers to the current picture by applying a vector scaling operation. In other words, the encoder/decoder may transform the motion vector (or motion information) of the block within the reference picture to a vector which is directed to the block within the current picture from the block within the reference picture by applying the vector scaling operation.

For example, the scaled motion vector may be scaled based on the POC difference between the current picture and the reference picture and the POC difference between the reference picture and the reference picture of the reference picture.

The encoder/decoder scales the motion vector (or motion information) of the block within the reference picture to be directed to the current picture and then determines whether the scaled motion vector corresponds to the area of the current picture (whether to specify the area of the current picture) (S1106). That is, the encoder/decoder may determine whether an end point of the scaled motion vector is located within the area of the current picture.

As a result of determining whether the scaled motion vector corresponds to the area of the current picture in step S1106, when the scaled motion vector does not correspond to the area of the current picture, the encoder/decoder moves to the next block of the selected block within the reference picture (S1104).

On the contrary, as the result of determining whether the scaled motion vector corresponds to the area of the current picture in step S1106, when the scaled motion vector corresponds to the area of the current picture, the encoder/decoder applies the opposite sign to the calculated vector and stores the vector in the position of the corresponding block (S1107).

In other words, when the scaled motion vector corresponds to the area of the current picture, the encoder/decoder may map the vector (i.e., reverse motion vector) having the opposite vector of the scaled motion vector to the position of the corresponding block of the current picture and store the vector.

When a block unit that searches the reverse motion information is a PU unit, the corresponding block 1005 may have the same size and shape as the searched PU. For example, when the shape of the PU is 2N x N, the shape of the corresponding block 1005 may also be 2N x N. In this case, the reverse motion information may be stored in units of the corresponding block 1005.

When the block unit that searches the reverse motion information is a unit having a fixed size, the corresponding block 1005 may be determined in units of the fixed size. For example, when the motion information of the PU within the reference picture is stored in units of 4 x 4 and the current PU has a size of 8 x 4 and the motion information may be each stored in units of 4 x 4 when the motion information is stored in a decoded picture buffer (DPB). In this case, the encoder/decoder may search the motion information in units of 4 x 4 and store the reverse motion information in units of the corresponding block 1005 (4 x 4).

Further, when the reverse motion information is stored while being mapped to the corresponding block, the reverse motion information may be stored in units of a predetermined size. For example, the corresponding block 1005 having a size of 8 x 8 may be split into four blocks having the size of 4 x 4 and the reverse motion information of the corresponding block 1005 may be similarly stored in each split block.

Further, the block unit that searches the reverse motion information is set to the size of 4 x 4 which is a minimum unit in which the motion information is stored to prevent a boundary of the PU from being positioned within the corresponding block.

The encoder/decoder maps the reverse motion information to the position of the corresponding block of the current picture and stores the reverse motion information and then determines whether the block within the selected reference picture is a last block of the reference picture (S1108).

As a result of determining whether the block within the selected reference picture is the last block of the reference picture in step S1108, when the selected block is not the last block, the encoder/decoder moves to the next block of the selected block within the reference picture (S1104).

As the result of determining whether the selected block is the last block of the reference picture in step S1108, when the selected block is the last block, the encoder/decoder determines whether the selected reference picture is a last picture in the reference picture list (S1109).

As a result of determining whether the selected reference picture is the last picture of the reference picture list, when the reference picture is not the last picture of the reference picture list, the encoder/decoder moves a next reference picture of the reference picture list.

On the contrary, as the result of determining whether the selected reference picture is the last picture of the reference picture list, when the reference picture is the last picture of the reference picture list, the encoder/decoder may end the reverse motion information prediction.

That is, the encoder/decoder may perform the above-described reverse motion information prediction with respect to all areas of the prediction picture and all of the reference pictures within the reference list (or the reference picture list).

A motion vector projected in a reverse direction by another reference picture of the reference list may correspond to the same corresponding block of the current picture during the reverse motion information predicting process and in this case, the encoder/decoder needs to determine a priority between reverse prediction motion information.

In other words, the same corresponding block may be specified by the scaled motion vector in which the reference picture is derived from motion information of different blocks and in this case, the encoder/decoder may determine the priority between the reference motion information.

When multiple reverse motion information corresponds to the same corresponding block, the following methods may be adopted.
1) It is possible to give a higher priority to the reverse prediction motion information derived from the reference picture closest to the current picture.
2) It is possible to give the higher priority to the reverse prediction motion information derived when the reference picture of the reference picture exists at a close distance from the current picture.
3) It is possible to give the higher priority to the reverse prediction motion information derived when the POC difference between the reference picture and the picture referred to by the reference picture and the POC difference between the reference picture and the current picture have the same sign.
4) When a difference (or a residual value) between the block within the reference picture and the block (i.e., a block identified by the motion information of the block within the reference picture) within the reference picture of the reference picture specified by the block within the reference picture is small, the higher priority may be given to the derived reverse prediction motion information.

However, the present invention is not limited thereto and various methods may be used for selecting (or determining) the priority between the reverse motion information in addition to such a method. Further, four methods described above may be respectively individually adopted and the priority may be determined (or given) between the reverse motion information by a method of combining a plurality of (e.g., 2 to 3) methods.

A priority determining method when the plurality of reverse motion information corresponds to the same corresponding block will be described in detail with reference to the following drawing.

The encoder/decoder may give the higher priority to the reverse prediction motion information derived from the reference picture which is closest to the current picture. Hereinafter, the priority determining method will be described with reference to the following drawing.

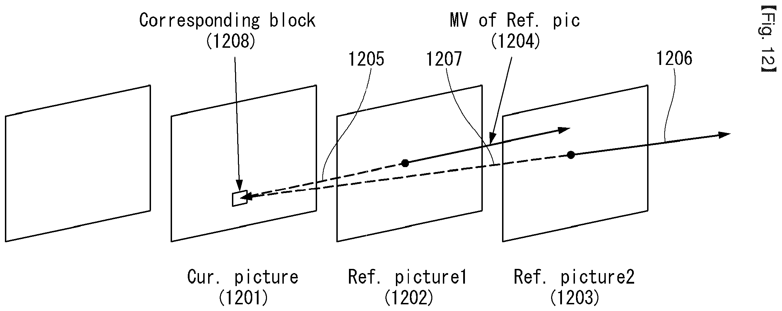

FIG. 12 is a diagram illustrating a method for determining a priority according to an embodiment of the present invention.

Referring to FIG. 12, a first method may be adopted when a reverse prediction motion vector at a random position of reference picture 1 1202 and a reverse prediction motion vector at a random position of reference picture 2 1203 correspond to a corresponding block 1208 at the same position of the same current picture 1201.

In other words, when the motion vector 1204 at the random position within reference picture 1 1202 and a motion vector 1206 at the random position within reference picture 2 1203 are scaled to be directed to the current picture 1201, such a method may be adopted in a case where scaled motion vectors 1205 and 1207 specify (or indicate) the corresponding block 1204 at the same position of the current picture 1201.

In this case, the encoder/decoder may give the higher priority to the reverse prediction motion information derived from reference picture 1 1202 which is closer to the current picture 1201.

In this case, the encoder/decoder may determine a distance between the current picture 1201 and the reference picture based on the POC difference. That is, since the POC difference between the current picture 1201 and reference picture 1 1202 is 1 and the POC difference between the current picture 1201 and reference picture 2 1203 is 2, the encoder/decoder may give the higher priority to the reverse motion information derived from reference picture 1 1202 having a small POC difference.

Further, the encoder/decoder may give the higher priority to the reverse prediction motion information derived when the reference picture of the reference picture exists at the close distance from the current picture. Hereinafter, giving the higher priority will be described with reference to the following drawing.

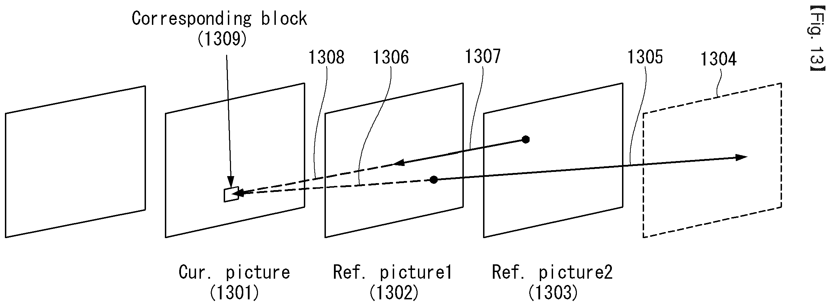

FIG. 13 is a diagram illustrating a method for determining a priority according to an embodiment of the present invention.

Referring to FIG. 13, when a motion vector 1305 of a block within reference picture 1 1302 and a motion vector 1307 of a block within reference picture 2 1303 are scaled to be directed to the current picture 1301, such a method may be adopted in a case where scaled motion vectors 1306 and 1308 specify (or indicate) the corresponding block 1305 at the same position of the current picture 1201.

In this case, the reference picture 1302 of reference picture 2 1303 may give the higher priority to the reverse motion information derived from reference picture 2 1303 which exists at the close distance from the current picture 1301 than the reference picture 1304 of reference picture 1 1302.

In this case, the encoder/decoder may determine distances between the current picture 1301 and the reference pictures 1304 and 1302 of the reference pictures 1302 and 1303 based on the POC difference. That is, since the POC difference between the current picture 1301 and the reference picture 1304 of reference picture 1 1302 is 3 and the POC difference between the current picture 1301 and the reference picture 1302 of picture 2 1303 is 1, the encoder/decoder may give the higher priority to the reverse motion information derived from reference picture 2 1303 having a small POC difference.

Further, the encoder/decoder may give the higher priority to the reverse prediction motion information derived when the POC difference between the reference picture and the reference picture of the reference picture and the POC difference between the reference picture and the current picture have the same sign.

Referring to FIG. 13, the motion vector 1305 of reference picture 1 1302 and the motion vector 1306 scaled to be directed to the current picture 1301 correspond to a case where directions are opposite to each other (that is, the POC difference between reference picture 1 1302 and the reference picture 1304 of reference picture 1 1302 and the POC difference between reference picture 1 1302 and the current picture 1301 have opposite signs).

On the contrary, the motion vector 1307 of reference picture 2 1303 and the motion vector 1308 scaled to be directed to the current picture 1301 correspond to a case where the directions are the same as each other (that is, the POC difference between reference picture 2 1303 and the reference picture 1302 of reference picture 2 1303 and the POC difference between reference picture 2 1303 and the current picture 1303 have the same sign).

In this case, the encoder / decoder may give the higher priority to the reverse motion information derived from reference picture 2 1303 in which the motion vector 1307 and the scaled motion vector 1308 have the same direction.

Further, when a difference (or a residual value) between the block within the reference picture and the block (i.e., a block identified by the motion information of the block within the reference picture) within the reference picture of the reference picture specified by motion information of the block within the reference picture is small, the encoder/decoder may given the higher priority to the derived reverse prediction motion information. Hereinafter, giving the higher priority will be described with reference to the following drawing.

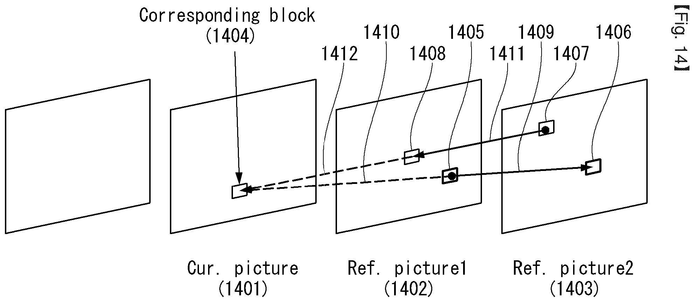

FIG. 14 is a diagram illustrating a method for determining a priority according to an embodiment of the present invention.

Referring to FIG. 14, when a motion vector 1409 of a block 1405 within reference picture 1 1401 and a motion vector 1411 of a block 1407 within reference picture 2 1403 are scaled to be directed to a current picture 1401, such a method may be adopted in a case where scaled motion vectors 1410 and 1412 specify (or indicate) a corresponding block 1404 at the same position of the current picture 1401.

When a smaller value between a difference (or a residual value) between the block 1405 within reference picture 1 1402 and a block (that is, a block within the reference picture 1403 of reference picture 1 1402 matched by motion information 1409 of the block 1405 within reference picture 1 1402) 1406 within the reference picture 1403 of reference picture 1 1402 specified by the motion information 1409 of the block 1405 and a difference (or a residual value) between the block 1407 of reference picture 2 1403 and a block (that is, a block within the reference picture 1402 of reference picture 2 1403 matched by motion information 1411 of the block 1407 within reference picture 2 1403) 1408 within the reference picture 1402 of reference picture 2 1403 specified by the motion information 1411 of the block 1407 is provided, the higher priority may be given to the derived reverse motion information.

In this case, in respect to a method for calculating the difference (or residual value) between the blocks, the difference may be calculated by various methods. For example, the difference (or residual value) between the blocks may be calculated by methods including mean square error (MSE), mean absolute deviation (MAD), sum of squared error, and the like.

Further, when the reference picture of the reference picture does not exist in the reference picture list of the current picture, the difference (or residual value) between the blocks may not be calculated, and as a result, a lowest priority may be given (or assigned).

As described above, various methods may be used as the method for determining the priority in addition to fourth methods described above and the above-described methods may be respectively individually used and a method of combining a plurality of methods may be used.

In order to adopt the above-described method, additional information may be required to be stored in addition to the reverse motion information in the reverse motion information predicting process. For example, in addition to the reverse motion information, the encoder/decoder may need to store the POC residual value between the current picture and the reference picture, the POC residual value between the current picture and the reference picture of the reference picture, the difference (or different value) between the random block of the reference picture and the block of the reference picture of the reference picture, and the like.

On the contrary, the encoder/decoder may adopt a method for giving the priority to values first filled without any other condition in order to perform the prediction without storing another value in addition to the reverse prediction motion information. In other words, the encoder/decoder may first apply the higher priority to the reverse motion information stored while being mapped to the corresponding block so as to store the reverse prediction motion information without additional information at the time of storing the motion information.

For example, when a search order of the reference list is set to a picture distant to the POC by starting from a reference picture close to the POC in the current picture, the same result as that of the first method may be obtained. In other words, when motion information prediction is performed from a reference picture closest to the current picture to a reference picture farthest from the current picture based on the POC, and the higher priority is first given to the reverse motion information stored while being mapped to the corresponding block, the same result as the method described in FIG. 12 above may be obtained.

A method for giving the priority to values first filled even within the reference picture may be adopted. Hereinafter, the method will be described with reference to following drawing.

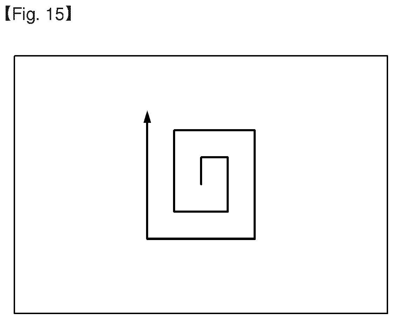

FIG. 15 is a diagram illustrating a method for determining a priority according to an embodiment of the present invention.

When the encoder/decoder performs the reverse motion information prediction within the reference picture, the encoder/decoder may apply a spiral search of performing searching while rotating to an edge of the reference picture at the center of the reference picture as illustrated in FIG. 15 instead of a raster scan order. In this case, the encoder/decoder may give the higher priority as being closer to the center of the reference picture.

For example, when an error rate of the reverse motion information derived from the block positioned at the edge of the reference picture is higher than the error ate of the reverse motion information derived from the block positioned at the center of the reference picture, the higher priority is given to the center of the reference picture by applying the spiral search, thereby enhancing encoding efficiency.

In the above description, a method for determining the priority between the reverse motion information when a plurality of scaled motion information indicates the same corresponding block has been described. Hereinafter, when various reverse motion information exists in a current block (HEVC, for example, a prediction unit (PU)) when using the motion information obtained through the reverse motion information predicting process, a method in which the encoder/decoder selects the reverse motion information to be used during an encoding/decoding process will be described.

In other words, when there is a plurality of corresponding blocks having the reverse motion information within the current block, a method in which the encoder/decoder determines (or gives) the priority to the reverse motion information is described.

When there is a plurality of corresponding blocks in the PU, the priority may be determined (or given) by adopting the following methods.
1) The encoder/decoder may use reverse motion information at a specific position within the current block as the reverse motion information of the current block.
2) The encoder/decoder may use reverse motion information having a different value from motion information of an adjacent (or neighboring) block of the current block as the reverse motion information of the current block.
3) The encoder/decoder may use a plurality of reverse motion information as the reverse motion information of the current block by listing the reverse motion information.

However, the present invention is not limited thereto and the priority between the reverse motion information may be determined (or given) by a method other than the above method and the priority may be determined (or given) between the reverse motion information by a method of combining the plurality of methods described above.

By adopting the first method, the encoder/decoder may give the higher priority to the reverse motion information of the corresponding block existing at a specific position of the current block among the plurality of reverse motion information. Hereinafter, giving the higher priority will be described with reference to the following drawing.

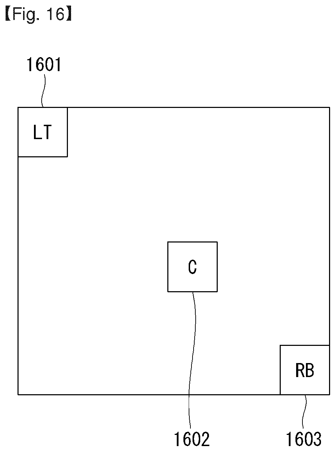

FIG. 16 is a diagram illustrating a method for determining a priority according to an embodiment of the present invention.

Referring to FIG. 16, an upper left sample 1601 of the current block may be a sample whose horizontal and vertical coordinates are [0, 0] based on a 2N x 2N block. A center sample 1601 of the current block may be a sample whose horizontal and vertical coordinates are [N, N] based on the 2N x 2N block. A lower right sample 1603 of the current block may be a sample whose horizontal and vertical coordinates are [2N - 1, 2N -1] based on the 2N x 2N block.

The encoder/decoder may weight and select reverse motion information existing at a position of the upper left sample 1601, the center sample 1602, or the lower right sample 1603.

One specific position or multiple positions within the current block for weighting may be used and other positions other than three positions illustrated in FIG. 16 may also be adopted.

When the reverse motion information does not exist at a specific position within the current block, but a plurality of reverse motion information exists, the encoder/decoder may select reverse motion information which is closest at the specific position.

In other words, the encoder/decoder may give the higher priority to the reverse motion information existing at the position of the upper left sample 1601, the center sample 1602, or the lower right sample 1603 of the current block or the reverse motion information existing at a distance closest to the position.

By using the position of the upper left sample 1601, the higher priority may be given to reverse motion information at a position (left-top: LT) representatively used in an image encoder.

By using the position of the center sample 1602, the higher priority may be given to reverse motion information at a position (center: C) to represent a characteristic of a block (or unit).

By using the position of the lower right sample 1603, motion information of a position (right-bottom: RB) where spatial motion information is not applied may also be used.

As described above, a position of a specific sample may be designated as a position other than threes positions described above according to the characteristic of the image, complexity of calculation, and the like.

By adopting a second method, the encoder/decoder may use the reverse motion information having a different value from the motion information of the adjacent (or neighboring) block of the current block as the reverse motion information of the current block.

The reverse motion information may be added (or inserted) to a motion information candidate list. For example, the reverse motion information may be inserted into a motion information candidate list of a merge mode or an advanced motion vector prediction (AMVP) mode.

In this case, when the reverse motion information has the same value as the motion information of the adjacent (or neighboring) block, the reverse motion information may not have a large meaning as data (in other words, may just be overlapped motion information), the encoder/decoder may give the higher priority to the reverse motion information when the reverse motion information has a different value from the adjacent motion information and use the reverse motion information as the reverse motion information of the current block.

In this case, since redundancy is checked in advance in the process of determining the reverse motion information of the current block, pruning in a configuration process of the merge mode or the AMVP mode may be omitted.

By adopting the third method, the encoder/decoder may store a plurality of reverse motion information and use the stored reverse motion information during the encoding/decoding process by listing the reverse motion information.

The encoder/decoder may configure a reverse motion information list by presetting a specific number and may configure the reverse motion information list by storing all reverse motion information without predetermining the number.

For example, when there are four pieces of reverse motion information in the current block (or the current PU) and the number of lists allowed to store the reverse motion information is two, the encoder/decoder may select two among four pieces of reverse motion information based on the given priority and store two selected reverse motion information in the reverse motion information list and use the stored reverse motion information during the encoding/decoding process.

In the process of configuring the list of the reverse motion information, the first method and the second method described above may be adopted respectively or simultaneously. In this case, the encoder/decoder may perform pruning to avoid redundancy of the reverse motion information.

In addition to three methods (or a method of combining a plurality of methods among three methods) described above, when there is a plurality of corresponding blocks which overlaps with the current block, the encoder/decoder may give the higher priority to the reverse motion information of a corresponding bock having a larger overlapping area among the plurality of corresponding blocks.

For example, when the current PU has a size of 16 x 16 and one corresponding block having the size of 8 x 8 and one corresponding block having the size of 4 x 4 exist within the current PU, the encoder/decoder may give the higher priority to the reverse motion information of the corresponding block having the size of 8x 8, which has a larger overlapping area.

Further when the block unit that searches the reverse motion information is the PU and the reverse motion information is stored while being mapped to the corresponding block in units of the PU, the boundary of the current PU may be positioned within the corresponding block.

For example, when it is assumed that the current PU has the size of 16 x 16 and the number of corresponding blocks having a size of 8 x 4 is two, the entirety of a part having the size of 8 x 4 of one corresponding block among two corresponding blocks may exist within the current PU and only a part having a the size of 4 x 4 which is a half size of the remaining one corresponding block may exist within the current PU and the remaining part having the size of 4 x 4 may exist outside the current PU.

In this case, the encoder/decoder may give the higher priority to the reverse motion information of the corresponding block of which the entirety of the part having the size of 8 x 4 exists in the current PU.

In the above description, the method for determining the priority of the plurality of reverse motion information has been described. Hereinafter, a method for bidirectionally performing the reverse motion information prediction will be described.

The encoder/decoder may generate bidirectional prediction motion information in the reverse motion information prediction. The following methods may be adopted in order to generate the bidirectional prediction motion information.
1) The encoder/decoder may set the direction of the bidirectional prediction motion information according to the direction of the reference picture list. That is, the encoder/decoder may configure reverse motion information derived from reference picture 0 (or L0 reference picture) which belongs to reference picture list 0 (or L0) in a direction of L0 and configure reverse motion information derived from reference picture 1 (or L1 reference picture) which belongs to reference picture list 1 (or L1) in a direction of L1.
2) The encoder/decoder may configure the L0 direction and the L1 direction according to whether an output time of the reference picture is past or future as compared with the current picture regardless of the direction of the reference picture list. That is, when the output time of the reference picture is past as compared with the current picture, the encoder/decoder may configure the reverse motion information in the L0 direction and when the output time is future, the encoder/decoder may configure the reverse motion information in the L1 direction.

According to the first method, a comparison operation process may not be performed may not be performed in a process of configuring the bidirectional prediction motion information by the method for configuring the direction according to the direction of the reference picture list of the current picture.

According to the second method, a comparison operation process of determining whether the output time of the reference picture is past or future as compared with the current picture may be required. However, according to the method, it is possible to prevent a case where a past picture is included in L1 and a future picture is included L0 in terms of an output.

A method for configuring the reference picture list in a bidirectional prediction will be described with reference to the following drawing.

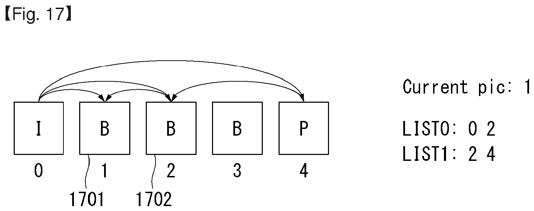

FIG. 17 is a diagram for describing a method for generating bidirectional prediction motion information according to an embodiment of the present invention.

Referring to FIG. 17, when the current picture is picture 1 1701, picture 2 1702 which is the future direction based on the output time may be included in reference picture list 0.

In this case, when the first method is adopted, reverse motion information derived from picture 2 1702 may be used as motion information of reference picture list 0 (or L0). On the contrary, when the second method is adopted, since the output time of picture 2 1702 is future based on picture 1 1701 which is the current picture, the reverse motion information derived from picture 2 1702 may be used as the motion information of reference picture list 1 (or L1). That is, when the second method is adopted, the reverse motion information derived from picture 2 1702 is not used as the motion information of reference picture list 0 (or L0).

Hereinabove, the method for deriving (or generating) the reverse motion information through the reverse motion information prediction has been described. Hereinafter, a method of using the motion information obtained through the reverse motion information predicting process in the encoding/decoding process will be described.

A block diagram of an encoder including the reverse motion information predicting method will be described with reference to the following drawing.

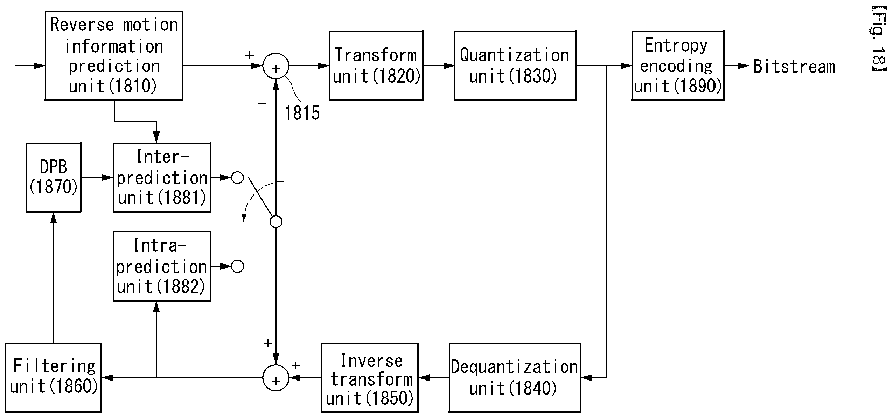

FIG. 18 illustrates a schematic block diagram of an encoder including a method for predicting bidirectional motion information according to an embodiment of the present invention.

Referring to FIG. 18, the encoder may be configured to include a reverse motion information predicting unit 1810, a subtractor 1815, a transform unit 1820, a quantization unit 1830, a dequantization unit 1840, an inverse transform unit 1850, a filtering unit 1860, a decoded picture buffer (DPB) 1870, an inter-prediction unit 1881, an intra-prediction unit 1882, and an entropy encoding unit 1890.

The reverse motion information predicting unit 1810 according to the preset invention may perform the reverse motion information prediction with respect to all reference pictures within the reference picture list.

In this case, the reverse motion information predicting unit 1810 may perform the reverse motion information prediction in units of the picture for the random block of the reference picture. In this case, the reverse motion information predicting unit 1810 may perform the reverse motion information prediction before an actual encoding/decoding process (i.e., a process of performing encoding/decoding in units of the block in the current picture). That is, the reverse motion information predicting unit 1810 may derive the reverse motion information with respect to the reference pictures of all reference lists before the encoding/decoding process is performed, store the reverse motion information in the corresponding block of the current picture and use the stored reverse motion information in the inter-picture prediction process.

On the contrary, the reverse motion information may be derived in units of the block in which the inter prediction is performed. In this case, the reverse motion information predicting unit 1810 may not be implemented as a separate component as illustrated in FIG. 18 and may be implemented as some components of the inter-prediction unit 1881.

Further, even when the reverse motion information is derived in units of the block in which the inter prediction is performed, the reverse motion information predicting unit 1810 may perform the reverse motion information prediction.

The reverse motion information predicting unit 1810 may perform the reverse motion information prediction by the method described in FIGS. 10 to 17.

That is, the reverse motion information predicting unit 1810 may derive the reverse motion information by using the motion information of the random block within the reference picture. Further, the reverse motion information predicting unit 1810 may store the derived reverse motion information while being mapped to the corresponding block of the current picture.

The reverse motion information predicting unit 1810 may perform the reverse motion information prediction with respect to all areas within all reference pictures which exist in the reference picture list of the current picture.

Further, the reverse motion information predicting unit 1810 may determine the priority among the plurality of reverse motion information when a plurality of scaled motion vectors indicates the same corresponding block of the current picture.

In addition, the reverse motion information predicting unit 1810 may determine the priority among the plurality of reverse motion information when there is a plurality of corresponding blocks having the reverse motion information within the current block.

The subtractor 1815 subtracts a prediction signal (or a prediction block) output from the inter-prediction unit 1881 or the intra-prediction unit 1882 from an input image signal to generate a residual signal (or a residual block). The generated residual signal (or residual block) is transmitted to the transform unit 1820.

The transform unit 1820 applies a transform technique (for example, Discrete Cosine Transform (DCT), Discrete Sine Transform (DST), Graph-Based Transform (GBT), Karhunen-Loeve transform (KLT), etc.) to the residual signal (or residual block) to generate a transform coefficient. In this case, the transform unit 1820 performs transform by using a transform technique determined according to a prediction mode applied to the residual block and a size of the residual block to generate the transform coefficients.

The quantization unit 1830 quantizes the transform coefficient and transmits the quantized transform coefficient to the entropy encoding unit 1890 and the entropy encoding unit 1890 entropy-codes a quantized signal and outputs the entropy-coded quantized signal as a bitstream.

Meanwhile, the quantized signal output from the quantization unit 1830 may be used for generating the prediction signal. For example, inverse quantization and inverse transform are applied to the quantized signal through the dequantization unit 1840 and the reverse transform unit 1850 in a loop to reconstruct the residual signal. The reconstructed residual signal is added to the prediction signal output from the inter-prediction unit 1881 or the intra-prediction unit 1882 to generate a reconstructed signal.

Meanwhile, adjacent blocks are quantized by different quantized parameters during such a compression process, and as a result, deterioration in which a block boundary is shown may occur. Such a phenomenon is referred to as blocking artifacts and this is one of key elements for evaluating an image quality. A filtering process may be performed in order to reduce the deterioration. Blocking deterioration is removed and an error for the current picture is reduced through the filtering process to enhance the image quality.

The filtering unit 1860 applies filtering to the reconstructed signal and outputs the applied reconstructed signal to a reproduction device or transmits the output reconstructed signal to the decoded picture buffer 1870. The inter-prediction unit 1881 may use the filtered signal transmitted to the decoded picture buffer 1870 as the reference picture. As such, the filtered picture is used as the reference picture in the inter-picture prediction mode to enhance the image quality and the encoding efficiency.

The decoded picture buffer 1870 may store the filtered picture in order to use the filtered picture as the reference picture in the inter-prediction unit 1881.

The inter-prediction unit 1881 performs a temporal prediction and/or spatial prediction in order to remove temporal redundancy and/or spatial redundancy by referring to the reconstructed picture.

In particular, the inter-prediction unit 1881 according to the present invention may use the reverse motion information stored while being mapped to the corresponding block by the reverse motion information predicting unit 1810 during the inter prediction (or inter-picture prediction) process. A detailed description thereof will be made later.

Here, since the reference picture used for prediction is a transformed signal that is quantized and inverse-quantized in units of the block at the time of encoding/decoding in the previous time, blocking artifacts or ringing artifacts may exist.

Accordingly, the inter-prediction unit 1881 may interpolate a signal between pixels in units of a sub-pixel by applying a low-pass filter in order to solve performance degradation due to discontinuity or quantization of such a signal. Here, the sub-pixel means a virtual pixel generated by applying an interpolation filter and an integer pixel means an actual pixel which exists in the reconstructed picture. As an interpolation method, linear interpolation, bi-linear interpolation, wiener filter, and the like may be adopted.

An interpolation filter is applied to the reconstructed picture to enhance precision of prediction. For example, the inter-prediction unit 1881 applies the interpolation filter to the integer pixel to generate an interpolated pixel and the prediction may be performed by using an interpolated block constituted by the interpolated pixels as the prediction block.

The intra-prediction unit 1882 predicts the current block by referring to samples in the vicinity of a block which is to be subjected to current encoding. The intra-prediction unit 1882 may perform the following process in order to perform the intra prediction. First, a reference sample may be prepared, which is required for generating the prediction signal. In addition, the prediction signal may be generated by using the prepared reference sample. Thereafter, the prediction mode is encoded. In this case, the reference sample may be prepared through reference sample padding and/or reference sample filtering. Since the reference sample is subjected to prediction and reconstruction processes, a quantization error may exist. Accordingly, a reference sample filtering process may be performed with respect to each prediction mode used for the intra prediction in order to reduce such an error.

The prediction signal (or prediction block) generated through the inter-prediction unit 1881 or the intra-prediction unit 1882 may be used for generating the reconstructed signal (or reconstructed block) or used for generating the residual signal (or residual block).

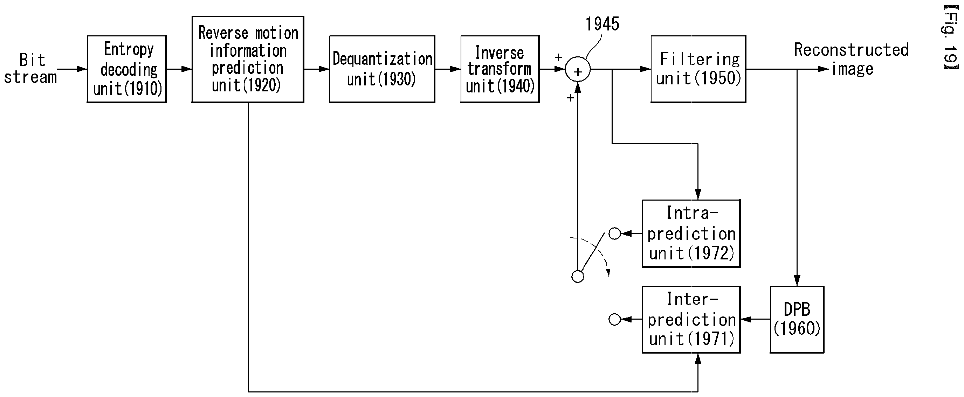

FIG. 19 illustrates a schematic block diagram of a decoder including a method for predicting bidirectional motion information according to an embodiment of the present invention.

Referring to FIG. 19, the decoder may be configured to include a reverse motion information predicting unit 1920, a dequantization unit 1930, an inverse transform unit 1940, an adder 1945, a filtering unit 1950, a decoded picture buffer (DPB) unit 1960, an inter-prediction unit 1971, and an intra-prediction unit 1972.

In addition, a reconstructed video signal output through the decoder may be reproduced through the reproduction device.

The decoder receives a signal (that is, a bitstream) output from the encoder of FIG. 18 and the received signal is entropy-decoded through the entropy decoding unit 1910.

The reverse motion information predicting unit 1920 may perform the reverse motion information prediction with respect to all reference pictures within the reference picture list.

In this case, the reverse motion information predicting unit 1920 may perform the reverse motion information prediction in units of the picture for the random block of the reference picture. In this case, the reverse motion information predicting unit 1920 may perform the reverse motion information prediction before an actual encoding/decoding process (i.e., a process of performing encoding/decoding in units of the block in the current picture). That is, the reverse motion information predicting unit 1920 may derive the reverse motion information with respect to the reference pictures of all reference lists before the encoding/decoding process is performed, store the reverse motion information in the corresponding block of the current picture and use the stored reverse motion information in the inter-picture prediction process.

On the contrary, the reverse motion information of the corresponding block may be derived in units of the block in which the inter prediction is performed. In this case, the reverse motion information predicting unit 1920 may not be implemented as a separate component as illustrated in FIG. 19 and may be implemented as some components of the inter-prediction unit 1971.

Further, the reverse motion information may be derived in units of the block in which the inter prediction is performed even when the reverse motion information predicting unit 1920 performs the reverse motion information prediction.

The reverse motion information predicting unit 1920 may perform the reverse motion information prediction by the method described in FIGS. 10 to 17.

That is, the reverse motion information predicting unit 1920 may derive the reverse motion information by using the motion information of the random block within the reference picture similarly to the encoder. Further, the reverse motion information predicting unit 1920 may store the derived reverse motion information while being mapped to the corresponding block of the current picture.

The reverse motion information predicting unit 1920 may perform the reverse motion information prediction with respect to all areas within all reference pictures which exist in the reference picture list of the current picture.

Further, the reverse motion information predicting unit 1920 may determine the priority among the plurality of reverse motion information when a plurality of scaled motion vectors indicates the same corresponding block of the current picture.

In addition, the reverse motion information predicting unit 1920 may determine the priority among the reverse motion information when there is a plurality of corresponding blocks having the reverse motion information within the current block.

The dequantization unit 1930 acquires the transform coefficient from an entropy-decoded signal by using quantization step size information.

The inverse transform unit 1940 inversely transforms the transform coefficient by applying an inverse transform technique to acquire the residual signal (or residual block).

The adder 1945 adds the acquired residual signal (or residual block) to the prediction signal (or prediction block) output from the inter-prediction unit 1971 or the intra-prediction unit 1972 to generate the reconstructed signal (or reconstructed block).

The filtering unit 1950 applies filtering to the reconstructed signal (or reconstructed block) and outputs the applied reconstructed signal to a generation device or transmits the output reconstructed signal to the decoded picture buffer unit 1960. The inter-prediction unit 1971 may use the filtered signal transmitted to the decoded picture buffer unit 1960 as the reference picture.

In this specification, embodiments described in the filtering unit 1860, the inter-prediction unit 1881, and the intra-prediction unit 1882 of the encoder may be similarly applied to the filtering unit 1950, the inter-prediction unit 1971, and the intra-prediction unit 1972 of the decoder, respectively.

In particular, the inter-prediction unit 1971 according to the present invention may use the reverse motion information stored while being mapped to the corresponding block by the reverse motion information predicting unit 1920 during the inter prediction (or inter-picture prediction) process. The detailed description thereof will be made later.

The reverse motion information derived through the reverse motion information prediction may be used for the inter prediction (or inter-picture prediction). For example, the reverse motion information may be applied as the motion information candidate list in the merge mode or advanced motion vector prediction (AMVP) mode.

Hereinafter, a method for configuring a candidate list of the merge mode by using the reverse motion information will be described with reference to the following drawing.

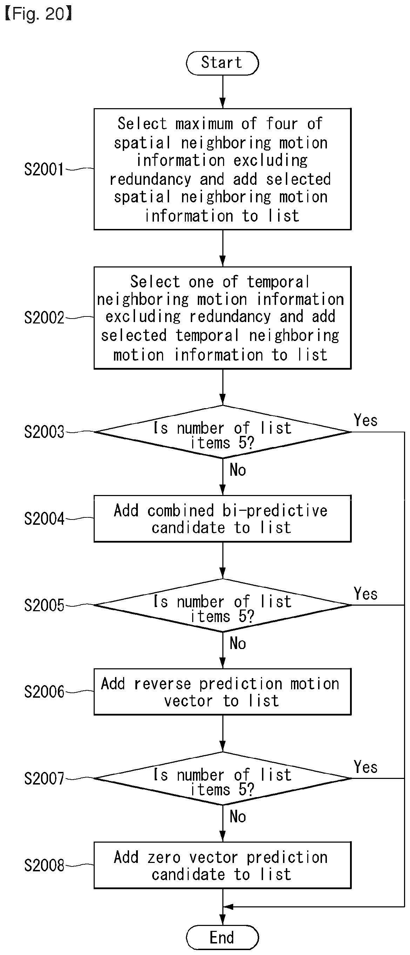

FIG. 20 is an embodiment to which the present invention may be applied and illustrates a method for configuring a motion information candidate list by using reverse motion information.

In the description of the present invention, for convenience of description, a case where the number of items of a merge candidate list is set to 5 is assumed and described, but the present invention is not limited thereto. Further, in the description of the present invention, a merge candidate list configuring process is described in detail with reference to FIG. 20 for convenience of description, but a motion information predicting process is not limited thereto.

Referring to FIG. 20, the encoder/decoder selects a maximum of four candidates in spatial neighboring motion information by excluding redundant motion information and adds four selected candidates to the candidate list.

A spatial neighboring motion information candidate may be configured by motion information of a block neighboring to the current block. As the block neighboring to the current block, for example, five merge candidates (that is, A1, B1, B0, A0, and B2 in FIG. 7(a)) may be used as described in FIG. 7(a).

When a spatial merge candidate configuration is completed, a temporal merge candidate configuring process is performed. That is, the encoder/decoder selects one candidate in the temporal neighboring motion information by excluding the redundant motion information and adds one selected candidate to the candidate list (S2002).

The direction of the reference picture and a reference picture index for a temporal merge candidate may be transmitted to the decoder through a slice header. The temporal merge candidate may be configured by motion information of the position within the reference picture corresponding to the current block or the position of the neighboring block of the current block within the reference picture. As a selection position of the temporal merge candidate, for example, positions (that is, T0 and T1 in FIG. 7(a)) described in FIG. 7(a) may be used.

After configuring the spatial and temporal merge candidates, the encoder/decoder determines whether the number of merge candidate list items is 5 or less than 5 (S2003).

As a result of determination in step S2003, when the number of merge candidates is configured as 5 which is a predetermined number of items, the encoder/decoder may end a merge candidate list configuration.

On the contrary, as the result of the determination in step S2003, when the number of merge candidates is less than 5 which is the predetermined number of items, the encoder/decoder adds a combined bi-predictive merging candidate to the candidate list (S2004).

Thereafter, the encoder/decoder determines whether the number of merge candidate list items is 5 or less than 5 (S2005).

As a result of determination in step S2005, when the number of merge candidates is configured as 5 which is the predetermined number of items, the encoder/decoder may end the merge candidate list configuration.

On the contrary, as the result of the determination in step S2005, when the number of merge candidates is less than 5 which is the predetermined number of items, the encoder/decoder adds a reverse prediction motion vector to the merge candidate list (S2006).

Thereafter, the encoder/decoder determines whether the number of merge candidate list items is 5 or less than 5 (S2007).

As a result of determination in step S2007, when the number of merge candidates is configured as 5 which is a predetermined number of items, the encoder/decoder may end the merge candidate list configuration.

On the contrary, as the result of the determination in step S2007, when the number of merge candidates is less than 5 which is a predetermined maximum number, the encoder/decoder changes the reference picture index until the number of merge candidates becomes 5 by considering the redundant motion information and adds a zero motion vector to the merge candidate list (S2009).

In FIG. 20 above, motion information (that is, a spatial motion information candidate, a temporal motion information candidate, a combined bi-predictive motion information candidate, a reverse motion information candidate, and a zero vector candidate) to be searched is just one example in order to configure the motion information candidate list and in the example of FIG. 20, only some motion information may be searched or motion information which is not illustrated in FIG. 20 may be additionally searched.

Further, the method (process or order) for configuring the merge candidate list is not limited to the method illustrated in FIG. 20. That is, unlike FIG. 20, the reverse motion information may be inserted into the merge candidate list earlier than the combined bi-predictive merging candidate, the reverse motion information may be inserted earlier than the spatial motion information candidate, and the reverse motion information may be inserted until the temporal motion information candidate is inserted after the spatial motion information candidate is inserted.

Further, some of the steps of FIG. 20 may be omitted and other steps may be added.

Even when an insertion sequence is changed as in the case where the reverse motion information is inserted into the merge candidate list earlier than the combined bi-predictive merging candidate, a syntax related to a moving picture encoder / decoder in relation to the merge mode may not be changed.

Hereinafter, a method for configuring a candidate list of the advanced motion vector prediction (AMVP) mode by using the reverse motion information will be described with reference to the following drawing.

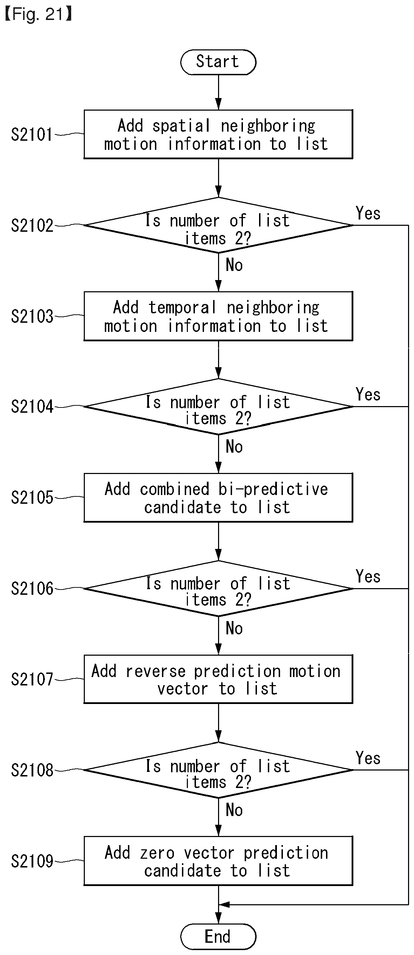

FIG. 21 is an embodiment to which the present invention may be applied and illustrates a method for configuring a motion information candidate list by using reverse motion information.

In the description of the present invention, for convenience of description, a case where the number of items of an AMP candidate list is set to 2 is assumed and described, but the present invention is not limited thereto.

Referring to FIG. 21, the encoder/decoder adds spatial neighboring motion information to the AMVP candidate list (S2101).

A spatial neighboring motion information candidate may be configured by motion information of a block neighboring to the current block. As the block neighboring to the current block, for example, five candidates (that is, A1, B1, B0, A0, and B2 in FIG. 7(a)) may be used as described in FIG. 7(a).

After adding the spatial neighboring motion information to the candidate list, the encoder/decoder determines whether the number of selected candidates is 2 or less than 2 (S2102).

As a result of determination in step S2102, when the number of selected candidates as a result of searching the spatial motion candidate is 2, a candidate configuration may be ended.

On the contrary, as the result of the determination in step S2102, when the number of selected candidates as the result of searching the spatial motion candidate is less than 2, the encoder/decoder adds the temporal neighboring motion information to the candidate list (S2103).

The direction of the reference picture and the reference picture index for a temporal AMVP candidate may be transmitted to the decoder through the slice header. The temporal AMVP candidate may be configured by motion information of the position within the reference picture corresponding to the current block or the position of the neighboring block of the current block within the reference picture. As a selection position of the temporal AMVP candidate, for example, two positions (that is, T0 and T1 in FIG. 7(a)) described in FIG. 7(a) may be used.

After configuring the spatial and temporal merge candidates, the encoder/decoder determines whether the number of AMVP candidate list items is 2 or less than 2 (S2104).

As a result of determination in step S2104, when the number of selected AMVP candidates is configured as 2 which is a predetermined number of items, the encoder/decoder may end an AMVP candidate list configuration.

On the contrary, as the result of the determination in step S2104, when the number of AMVP candidates is less than 2 which is the predetermined number of items, the encoder/decoder adds a bi-predictive AMVP candidate to the candidate list (S2105).

Thereafter, the encoder/decoder determines whether the number of AMVP candidate list items is 2 or less than 2 (S2106).

As a result of determination in step S2106, when the number of selected AMVP candidates is configured as 2 which is the predetermined number of items, the encoder/decoder may end the AMVP candidate list configuration.

On the contrary, as the result of the determination in step S2106, when the number of AMVP candidates is less than 2 which is the predetermined number of items, the encoder/decoder adds the reverse prediction motion vector to the AMVP candidate list (S2107).

Thereafter, the encoder/decoder determines whether the number of AMVP candidate list items is 2 or less than 2 (S2108).

As a result of determination in step S2108, when the number of selected AMVP candidates is configured as 2 which is the predetermined number of items, the encoder/decoder may end the AMVP candidate list configuration.

On the contrary, as the result of the determination in step S2108, when the number of AMVP candidates is less than 2 which is the predetermined number of items, the encoder/decoder adds the zero motion vector to the AMVP candidate list (S2109).

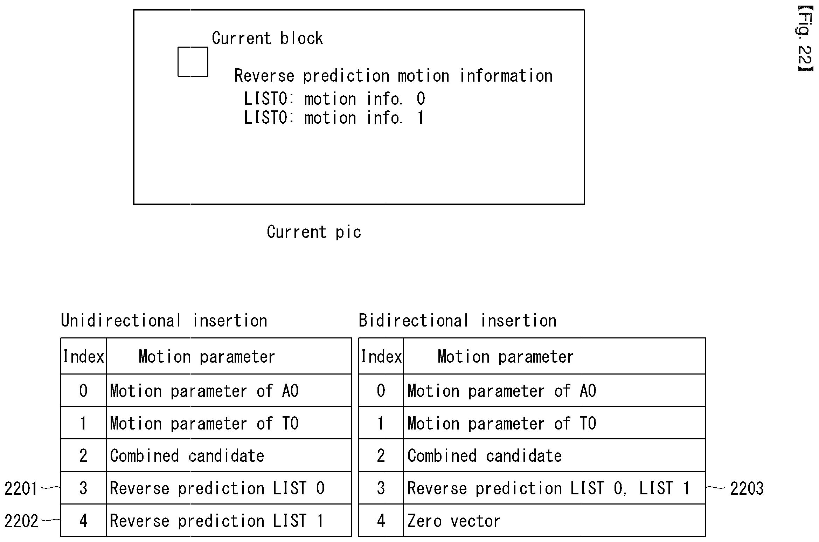

In FIG. 22 above, motion information (that is, a spatial motion information candidate, a temporal motion information candidate, a combined bi-predictive motion information candidate, a reverse motion information candidate, and a zero vector candidate) to be searched is just one example in order to configure the motion information candidate list and in the example of FIG. 21, only some motion information may be searched or motion information which is not illustrated in FIG. 21 may be additionally searched.

Further, the method (process or order) for configuring the AMVP candidate list is not limited to the method illustrated in FIG. 21. That is, unlike FIG. 21, the reverse motion information may be inserted into the AMVP candidate list earlier than the combined bi-predictive AMVP candidate, the reverse motion information may be inserted earlier than the spatial motion information candidate, and the reverse motion information may be inserted until the temporal motion information candidate is inserted after the spatial motion information candidate is inserted.

Further, some of the steps of FIG. 21 may be omitted and other steps may be added.

In both the merge mode and the AMVP mode, when the reverse motion information is inserted into the candidate list, the reverse motion information may be inserted into bi-predictive motion information or unidirectional prediction motion information. Hereinafter, the insertion will be described with reference to following drawings.

FIG. 22 illustrates a method for inserting reverse prediction motion information into a motion information candidate list according to an embodiment of the present invention.

When the reverse motion information stored in the corresponding block of the current picture is the bi-predictive motion information, the motion information in each direction (direction of reference picture list 0 or reference picture list 1) may be individually applied as unidirectional prediction and simultaneously applied as bidirectional prediction.

Referring to FIG. 22, the bi-predictive motion information stored in the corresponding block may be unidirectionally inserted into the motion information candidate list. When the reverse prediction motion information is unidirectionally inserted, the reverse prediction motion information may be inserted into each of two candidates. That is, the reverse motion information in the direction of reference picture list 0 may be inserted into the candidate list (2201) and the reverse motion information in the direction of reference picture list 1 may be individually inserted into the candidate list (2202).

On the contrary, the bi-predictive motion information stored in the corresponding block may be bidirectionally inserted into the motion information candidate list. When the bi-predictive motion information is bidirectionally inserted into the candidate list, the motion information in the directions of reference picture list 0 (that is, L0) and reference picture list 1 (that is, L1) may be inserted into the candidate list as one motion information (2203).

Further, a plurality of reverse prediction motion information lists is configured for each direction (direction of reference picture list 0 or reference picture list 1) to select one of the plurality of motion information and inserted the selected motion information into the candidate list.

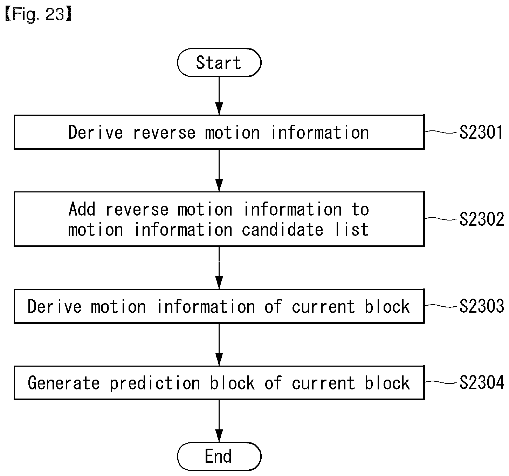

FIG. 23 is a diagram illustrating an inter prediction based image processing method according to an embodiment of the present invention.

The encoder/decoder derives the reverse motion information of the current block by using the motion information of the block within the reference picture of the current picture (S2301).

As described above with reference to FIGS. 10 and 11, the encoder/decoder may derive the reverse motion information using the motion information at the random position within the reference picture.

That is, the encoder/decoder may scale the motion vector of the block within the reference picture and transform the scaled motion vector to the motion vector direct to the current picture. The encoder/decoder may store the reverse motion information that takes a sign opposite to each sign of the scaled motion vector while being mapped to the corresponding block of the current picture.

Further, the encoder/decoder may perform the reverse motion information prediction with respect to all areas within all reference pictures which exist within the reference picture list of the current picture.

Further, as described in FIGS. 12 to 15, when the plurality of reverse motion information is stored while being mapped to the same corresponding block, the encoder/decoder may give a priority for selecting the plurality of reverse motion information as the reverse motion information of the current block to the plurality of reverse motion information.

In addition, as described in FIG. 16, when there is the plurality of corresponding blocks having the reverse motion information in the current block, the encoder/decoder may give a priority for selecting the reverse motion information of the plurality of corresponding blocks as the reverse motion information of the current block to the reverse motion information.

The encoder/decoder may add the reverse motion information to the motion information candidate list of the current block (S2302).

As described in FIGS. 20 to 22 above, the reverse motion information may be added (or inserted) to the motion information list in the merge mode or advanced motion vector prediction (AMVP) mode of the inter prediction.

As described above, after the spatial motion information candidate and the temporal motion information candidate are added to the motion information candidate list, the number of motion information candidates added to the current motion information candidate list is smaller than the number of predetermined items of the motion information candidate list, the reverse motion information may be added to the motion information candidate list.

Further, as described above, after the spatial motion information candidate and the temporal motion information candidate are added to the motion information candidate list, the number of motion information candidates added to the current motion information candidate list is smaller than the number of predetermined items of the motion information candidate list, the combined bidirectional motion information candidate acquired by combining the motion information added to the motion information candidate list may be added to the motion information candidate list. After the combined bidirectional motion information candidate is added to the motion information candidate list (or may not be added), the number of motion information candidates added to the current motion information candidate list is smaller than the number of predetermined items of the motion information candidate list, the reverse motion information may be added to the motion information candidate list.

Further, when there is the plurality of reverse motion information, the reverse motion information may be added (or inserted) to the motion information candidate list of the current block by a predetermined number based on the priority given to the plurality of reverse motion information.

The encoder/decoder derives the motion information of the current block from the motion information selected from the motion information candidates added to the motion information candidate list (S2303).

In this case, the decoder may receive from the encoder a motion information candidate index for specifying the motion information of the current block in the motion information candidate list of the current block. In this case, the motion information of the current block may be derived from the motion information candidate indicated by the received motion information candidate index.

For example, when the merge mode is applied to the current block, the decoder may receive a merge index from the encoder and decode the received merge index. In addition, the motion information indicated by the merge index within a merge candidate list (or motion information candidate list) may be derived as the motion information of the current block.

Further, for example, when the AMVP mode is applied to the current block, the decoder may receive a motion reference flag from the encoder and decode the received motion reference flag. In addition, the motion information indicated by the motion reference flag within a motion vector prediction value candidate list may be derived as a motion vector prediction value of the current block. Further, the decoder decodes a received motion vector residual value, a reference picture index, and an inter prediction mode received from the encoder and sums the derived motion vector prediction value and the decoded motion vector residual value to derive the motion vector of the current block.

The encoder/decoder generates the prediction block of the current block by using the motion information of the current block (S2304).

The encoder/decoder may generate the prediction block of the current block from a block specified by the motion information (in particular, motion vector) in the reference picture specified by the motion information (in particular, reference picture index).

In other words, the encoder/decoder may generate (derive) the sample value of a block (area) specified by the motion vector within the reference picture as a sample value of a prediction unit of the current block from the sample value of the block (area) specified by the motion vector within the reference picture.

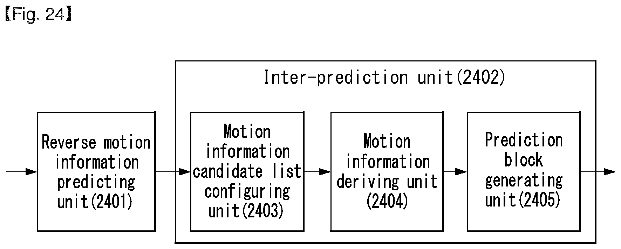

FIG. 24 is a diagram illustrating a reverse motion information predicting unit and an inter-prediction unit according to an embodiment of the present invention.

A reverse motion information predicting unit 2401 and an inter-prediction unit 2402 are separately illustrated for convenience of description in FIG. 24, but the reverse motion information predicting unit 2401 may be implemented as a component included in the inter-prediction unit 2402. Further, each of the reverse motion information predicting unit 2401 and the inter-prediction unit 2402 is illustrated as one block, but the reverse motion information predicting unit 2401 and/or the inter-prediction unit 2402 may be implemented as a component included in the encoder and/decoder.

Referring to FIG. 24, the reverse motion information predicting unit 2401 and/or the inter-prediction unit 2402 implement functions, processes, and/or methods proposed in FIGS. 9 to 19 above. Specifically, the inter-prediction unit 2402 may be configured to include a motion information candidate list configuring unit 2403, a motion information deriving unit 2404, and a prediction block generating unit 2405.

As described above with reference to FIGS. 10 and 11 above, the reverse motion information predicting unit 2401 may derive the reverse motion information using the motion information at the random position within the reference picture.

That is, the reverse motion information predicting unit 2401 may scale the motion vector of the block within the reference picture and transform the scaled motion vector to the motion vector direct to the current picture. The reverse motion information predicting unit 2401 may store the reverse motion information that takes a sign opposite to each sign of the scaled motion vector while being mapped to the corresponding block of the current picture.

The reverse motion information predicting unit 2401 may perform the reverse motion information prediction with respect to all areas within all reference pictures which exist in the reference picture list of the current picture.

Further, as described in FIGS. 12 to 15, when the plurality of reverse motion information is stored while being mapped to the same corresponding block, the reverse motion information predicting unit 2401 may give the priority for selecting the plurality of reverse motion information as the reverse motion information of the current block to the plurality of reverse motion information.

In addition, as described in FIG. 16, when there is the plurality of corresponding blocks having the reverse motion information in the current block, the reverse motion information predicting unit 2401 may give a priority for selecting the reverse motion information of the plurality of corresponding blocks as the reverse motion information of the current block to the reverse motion information.

The motion information candidate list configuring unit 2403 may add the reverse motion information to the motion information candidate list of the current block.

As described in FIGS. 20 to 22 above, the motion information candidate list configuring unit 2403 may add (or insert) the reverse motion information to the motion information list in the merge mode or advanced motion vector prediction (AMVP) mode of the inter prediction.

As described above, after the spatial motion information candidate and the temporal motion information candidate are added to the motion information candidate list, the number of motion information candidates added to the current motion information candidate list is smaller than the number of predetermined items of the motion information candidate list, the reverse motion information may be added to the motion information candidate list.

Further, as described above, after the spatial motion information candidate and the temporal motion information candidate are added to the motion information candidate list, when the number of motion information candidates added to the current motion information candidate list is smaller than the number of predetermined items of the motion information candidate list, the combined bidirectional motion information candidate acquired by combining the motion information added to the motion information candidate list may be added to the motion information candidate list. After the combined bidirectional motion information candidate is added to the motion information candidate list (or may not be added), the number of motion information candidates added to the current motion information candidate list is smaller than the number of predetermined items of the motion information candidate list, the reverse motion information may be added to the motion information candidate list.

Further, when there is the plurality of reverse motion information, motion information candidate list configuring unit 2403 may add (or insert) the reverse motion information to the motion information candidate list of the current block by a predetermined number based on the priority given to the plurality of reverse motion information.

The motion information deriving unit 2404 may derive the motion information of the current block from the motion information selected from the motion information candidates added to the motion information candidate list.

In this case, the motion information deriving unit 2404 may receive from the encoder a motion information candidate index for specifying the motion information of the current block in the motion information candidate list of the current block. In this case, the motion information of the current block may be derived from the motion information candidate indicated by the received motion information candidate index.

For example, when the merge mode is applied to the current block, the motion information deriving unit 2404 may receive the merge index from the encoder and decode the received merge index. In addition, the motion information indicated by the merge index within a merge candidate list (or motion information candidate list) may be derived as the motion information of the current block.

Further, for example, when the AMVP mode is applied to the current block, the motion information deriving unit 2404 may receive the motion reference flag from the encoder and decode the received motion reference flag. In addition, the motion information indicated by the motion reference flag within a motion vector prediction value candidate list may be derived as a motion vector prediction value of the current block. Further, the motion information deriving unit 2403 decodes a received motion vector residual value, a reference picture index, and an inter prediction mode received from the encoder and sums the derived motion vector prediction value and the decoded motion vector residual value to derive the motion vector of the current block.

The prediction block generating unit 2405 may generate the prediction block of the current block by using the derived motion information of the current block.

The prediction block generating unit 2405 may generate the prediction block of the current block from a block specified by the motion information (in particular, motion vector) in the reference picture specified by the motion information (in particular, reference picture index).

In other words, the prediction block generating unit 2405 may generate (derive) the sample value of a block (area) specified by the motion vector within the reference picture as a sample value of a prediction unit of the current block from the sample value of the block (area) specified by the motion vector within the reference picture.

In the embodiments described above, the components and the features of the present invention are combined in a predetermined form. Each component or feature should be considered as an option unless otherwise expressly stated. Each component or feature may be implemented not to be associated with other components or features. Further, the embodiment of the present invention may be configured by associating some components and/or features. The order of the operations described in the embodiments of the present invention may be changed. Some components or features of any embodiment may be included in another embodiment or replaced with the component and the feature corresponding to another embodiment. It is apparent that the claims that are not expressly cited in the claims are combined to form an embodiment or be included in a new claim by an amendment after the application.

The embodiments of the present invention may be implemented by hardware, firmware, software, or combinations thereof. In the case of implementation by hardware, according to hardware implementation, the exemplary embodiment described herein may be implemented by using one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

In the case of implementation by firmware or software, the embodiment of the present invention may be implemented in the form of a module, a procedure, a function, and the like to perform the functions or operations described above. A software code may be stored in the memory and executed by the processor. The memory may be positioned inside or outside the processor and may transmit and receive data to/from the processor by already various means.

It is apparent to those skilled in the art that the present invention may be embodied in other specific forms without departing from essential characteristics of the present invention. Accordingly, the aforementioned detailed description should not be construed as restrictive in all terms and should be exemplarily considered. The scope of the present invention being determined by the appended claims.

## Claims

1. A method for processing an image based on an inter prediction, the method comprising:
obtaining at least one motion information of at least one corresponding block located in a current picture;
deriving reverse motion information of a current block by using the at least one motion information of the at least one corresponding block;
adding the reverse motion information as a motion information candidate, to a motion information candidate list of the current block including a plurality of motion information candidates;
deriving motion information of the current block from the motion information selected among the plurality of motion information candidates within the motion information candidate list; and
generating a prediction block of the current block by using the motion information of the current block,
wherein the obtaining at least one motion information of at least one corresponding block comprises:
searching (S1103) for one or more blocks having motion information within at least one reference picture of the current picture;
scaling (S1105) the motion information of the one or more blocks within the at least one reference picture to be directed to the current picture to obtain first motion information;
applying (S1107) an opposite sign to the first motion information to obtain second motion information when the first motion information specifies an area of the current picture; and
storing the second motion information in a corresponding block corresponding to the area of the current picture, the corresponding block being located in the current picture, and
wherein the deriving reverse motion information of a current block comprises:
determining the second motion information stored in the corresponding block which overlaps with the current block as the reverse motion information of the current block.

2. The method of claim 1, wherein the motion information of the block within the reference picture is scaled (S1105) based on a picture order count, POC, difference between the current picture and the reference picture and the POC difference between the reference picture and the reference picture of the reference picture.

3. The method of claim 1, further comprising:
assigning, when a plurality of second motion information are stored in a single corresponding block, priority orders for selecting one or more of the plurality of second motion information as the reverse motion information of the current block, to the plurality of second motion information.

4. The method of claim 3, wherein when a difference of a picture order, POC, between the current picture and the reference picture is small, a higher priority is assigned.

5. The method of claim 3, wherein when a difference of a picture order, POC, between the current picture and a first reference picture of the reference picture is small, the higher priority is assigned, the first reference picture of the reference picture is a picture which a first block within the reference picture refers to by motion information of the first block.

6. The method of claim 3, wherein when a picture order, POC, difference between the current picture and the reference picture and the POC difference between the reference picture and a first reference picture of the reference picture have a same sign, a higher priority is assigned, the first reference picture of the reference picture is a picture which a first block within the reference picture refers to by motion information of the first block.

7. The method of claim 3, wherein when a difference value between the block within the reference picture and a first block within a first reference picture of the reference picture specified by the block within the reference picture is small, a higher priority is assigned, the first reference picture of the reference picture is a picture which the block within the reference picture refers to by motion information of the block within the reference picture.

8. The method of claim 3, wherein a higher priority is assigned to the second motion information first corresponding to the corresponding block among the plurality of second motion information.

9. The method of claim 1, further comprising:
assigning, when there are a plurality of corresponding blocks which overlap with the current block within the current picture, a priority order for selecting one or more of a plurality of second motion information of the plurality of corresponding blocks as the reverse motion information of the current block, to the plurality of second motion information of the plurality of corresponding blocks.

10. The method of claim 9, wherein a higher priority is assigned to the second motion information of a corresponding block which exists close to a position of a specific sample of the current block among the plurality of second motion information.

11. The method of claim 10, wherein the specific sample is any one sample of an upper left sample, a center sample, and a lower right sample of the current block.

12. The method of claim 9, wherein a higher priority is assigned to the second motion information having a different value from motion information of a neighboring block of the current block among the plurality of second motion information.

13. The method of claim 1, wherein when there are a plurality of reverse motion information of the current block, a predetermined number of the reverse motion information are added to the motion information candidate list of the current block based on a priority order assigned to the plurality of reverse motion information.

14. The method of claim 1, wherein when a plurality of second motion information derived from reference pictures of different reference picture lists correspond to a single corresponding block, bidirectional motion information derived from the plurality of second motion information is stored while being mapped to the single corresponding block.

15. An apparatus for processing an image based on an inter prediction, the apparatus comprising:
a reverse motion information deriving unit (2401) for obtaining at least one motion information of at least one corresponding block located in a current picture and deriving reverse motion information of a current block by using at least one motion information of the at least one corresponding block;
a motion information candidate list configuring unit (2403) adding the reverse motion information as a motion information candidate, to a motion information candidate list of the current block including a plurality of motion information candidates;
a motion information deriving unit (2404) deriving motion information of the current block from the motion information selected among the plurality of motion information candidates within the motion information candidate list; and
a prediction block generating unit (2405) generating a prediction block of the current block by using the motion information of the current block,
wherein the reverse motion information deriving unit is configured for:
searching (S 1103) for one or more blocks having motion information within at least one reference picture of the current picture;
scaling (S 1105) the motion information of the one or more blocks within the at least one reference picture to be directed to the current picture to obtain first motion information;
applying (S1107) an opposite sign to the first motion information to obtain second motion information when the first motion information specifies an area of the current picture;
storing the second motion information in a corresponding block corresponding to the area of the current picture, the corresponding block being located in the current picture; and
determining the second motion information stored in the corresponding block which overlaps with the current block as the reverse motion information of the current block.

## Patentansprüche

1. Verfahren zum Verarbeiten eines Bilds basierend auf einer Interprädiktion, das Verfahren umfassend:
Erlangen mindestens einer Bewegungsinformation von mindestens einem korrespondierenden Block, der in einem gegenwärtigen Bild angeordnet ist;
Ableiten einer umgekehrten Bewegungsinformation eines gegenwärtigen Blocks durch Verwendung der mindestens einen Bewegungsinformation des mindestens einen korrespondierenden Blocks;
Hinzuzufügen der umgekehrten Bewegungsinformation als einen Bewegungsinformationenkandidaten zu einer Bewegungsinformationenkandidatenliste des gegenwärtigen Blocks, enthaltend eine Vielzahl von Bewegungsinformationenkandidaten;
Ableiten einer Bewegungsinformation des gegenwärtigen Blocks von der Bewegungsinformation, ausgewählt aus der Vielzahl von Bewegungsinformationenkandidaten in der Bewegungsinformationenkandidatenliste; und
Erzeugen eines Prädiktionsblocks des gegenwärtigen Blocks durch Verwendung der Bewegungsinformation des gegenwärtigen Blocks,
wobei das Erlangen mindestens einer Bewegungsinformation von mindestens einem korrespondierenden Block umfasst:
Suchen (S1103) nach einem oder mehreren Blöcken mit Bewegungsinformation in mindestens einem Referenzbild des gegenwärtigen Bilds;
Skalieren (S1105) der Bewegungsinformation des einen oder der mehreren Blöcke in dem mindestens einen Referenzbild, das an das gegenwärtige Bild geleitet werden soll, um eine erste Bewegungsinformation zu erlangen;
Anwenden (S1107) eines entgegengesetzten Vorzeichens auf die erste Bewegungsinformation, um eine zweite Bewegungsinformation zu erlangen, wenn die erste Bewegungsinformation einen Bereich des gegenwärtigen Bilds spezifiziert; und
Speichern der zweiten Bewegungsinformation in einem korrespondierenden Block korrespondierend mit dem Bereich des gegenwärtigen Bilds, wobei der korrespondierende Block in dem gegenwärtigen Bild angeordnet ist, und
wobei das Ableiten einer umgekehrten Bewegungsinformation eines gegenwärtigen Blocks umfasst:
Bestimmen der in dem korrespondierenden Block gespeicherten zweiten Bewegungsinformation, die mit dem gegenwärtigen Block überlappt, als die umgekehrte Bewegungsinformation des gegenwärtigen Blocks.

2. Verfahren nach Anspruch 1, wobei die Bewegungsinformation des Blocks in dem Referenzbild basierend auf einer Bildreihenfolgezählung- bzw. POC-Differenz zwischen dem gegenwärtigen Bild und dem Referenzbild und der POC-Differenz zwischen dem Referenzbild und dem Referenzbild des Referenzbilds skaliert wird (S1105).

3. Verfahren nach Anspruch 1, ferner umfassend:
Zuweisen, wenn eine Vielzahl von zweiten Bewegungsinformationen in einem einzelnen korrespondierenden Block gespeichert ist, von Prioritätsfolgen zum Auswählen einer oder mehrerer der Vielzahl von zweiten Bewegungsinformationen als die umgekehrte Bewegungsinformation des gegenwärtigen Blocks zu der Vielzahl von zweiten Bewegungsinformationen.

4. Verfahren nach Anspruch 3, wobei, wenn eine Differenz einer Bildreihenfolge, POC, zwischen dem gegenwärtigen Bild und dem Referenzbild klein ist, eine höhere Priorität zugewiesen wird.

5. Verfahren nach Anspruch 3, wobei, wenn eine Differenz einer Bildreihenfolge, POC, zwischen dem gegenwärtigen Bild und einem ersten Referenzbild des Referenzbilds klein ist, die höhere Priorität zugewiesen wird, wobei das erste Referenzbild des Referenzbilds ein Bild ist, auf das ein erster Block in dem Referenzbild durch eine Bewegungsinformation des ersten Blocks verweist.

6. Verfahren nach Anspruch 3, wobei, wenn eine Bildreihenfolge- bzw. POC-Differenz zwischen dem gegenwärtigen Bild und dem Referenzbild und die POC-Differenz zwischen dem Referenzbild und einem ersten Referenzbild des Referenzbilds ein selbes Vorzeichen aufweisen, eine höhere Priorität zugewiesen wird, wobei das erste Referenzbild des Referenzbilds ein Bild ist, auf das ein erster Block in dem Referenzbild durch eine Bewegungsinformation des ersten Blocks verweist.

7. Verfahren nach Anspruch 3, wobei, wenn ein Differenzwert zwischen dem Block in dem Referenzbild und einem ersten Block in einem ersten Referenzbild des Referenzbilds, spezifiziert durch den Block in dem Referenzbild, klein ist, eine höhere Priorität zugewiesen wird, wobei das erste Referenzbild des Referenzbilds ein Bild ist, auf das der Block in dem Referenzbild durch eine Bewegungsinformation des Blocks in dem Referenzbild verweist.

8. Verfahren nach Anspruch 3, wobei der zweiten Bewegungsinformation, die zuerst mit dem korrespondierenden Block in der Vielzahl von zweiten Bewegungsinformationen korrespondiert, eine höhere Priorität zugewiesen wird.

9. Verfahren nach Anspruch 1, ferner umfassend:
Zuweisen, wenn eine Vielzahl von korrespondierenden Blöcken, die mit dem gegenwärtigen Block in dem gegenwärtigen Bild überlappen, vorhanden ist, einer Prioritätsfolge zum Auswählen einer oder mehrerer einer Vielzahl von zweiten Bewegungsinformationen der Vielzahl von korrespondierenden Blöcken als die umgekehrte Bewegungsinformation des gegenwärtigen Blocks zu der Vielzahl von zweiten Bewegungsinformationen der Vielzahl von korrespondierenden Blöcken.

10. Verfahren nach Anspruch 9, wobei eine höhere Priorität der zweiten Bewegungsinformation eines korrespondierenden Blocks, der nahe einer Position einer spezifischen Abtastung des gegenwärtigen Blocks in der Vielzahl von zweiten Bewegungsinformationen existiert, zugewiesen wird.

11. Verfahren nach Anspruch 10, wobei die spezifische Abtastung eine beliebige Abtastung einer oberen linken Abtastung, einer mittleren Abtastung und einer unteren rechten Abtastung des gegenwärtigen Blocks ist.

12. Verfahren nach Anspruch 9, wobei eine höhere Priorität der zweiten Bewegungsinformation, die einen anderen Wert als eine Bewegungsinformation eines benachbarten Blocks des gegenwärtigen Blocks in der Vielzahl von zweiten Bewegungsinformationen aufweist, zugewiesen wird.

13. Verfahren nach Anspruch 1, wobei, wenn eine Vielzahl von umgekehrten Bewegungsinformationen des gegenwärtigen Blocks vorhanden ist, eine im Voraus bestimmte Anzahl der umgekehrten Bewegungsinformationen der Bewegungsinformationenkandidatenliste des gegenwärtigen Blocks basierend auf einer Prioritätsfolge, die der Vielzahl von umgekehrten Bewegungsinformationen zugewiesen wurde, hinzugefügt wird.

14. Verfahren nach Anspruch 1, wobei, wenn eine Vielzahl von zweiten Bewegungsinformationen, abgeleitet von Referenzbildern von verschiedenen Referenzbilderlisten, mit einem einzelnen korrespondierenden Block korrespondiert, eine bidirektionale Bewegungsinformation, abgeleitet von der Vielzahl von zweiten Bewegungsinformationen, gespeichert wird, während sie auf den einzelnen korrespondierenden Block abgebildet wird.

15. Vorrichtung zum Verarbeiten eines Bilds basierend auf einer Interprädiktion, die Vorrichtung umfassend:
eine Einheit zum Ableiten umgekehrter Bewegungsinformationen (2401) zum Erlangen mindestens einer Bewegungsinformation von mindestens einem korrespondierenden Block, der in einem gegenwärtigen Bild angeordnet ist, und Ableiten einer umgekehrten Bewegungsinformation eines gegenwärtigen Blocks durch Verwendung der mindestens einen Bewegungsinformation des mindestens einen korrespondierenden Blocks;
eine Bewegungsinformationenkandidatenlisten-Konfigurationseinheit (2403), die die umgekehrte Bewegungsinformation als einen Bewegungsinformationenkandidaten zu einer Bewegungsinformationenkandidatenliste des gegenwärtigen Blocks, enthaltend eine Vielzahl von Bewegungsinformationenkandidaten, hinzufügt;
eine Bewegungsinformationen-Ableitungseinheit (2404), die eine Bewegungsinformation des gegenwärtigen Blocks von der Bewegungsinformation, ausgewählt aus der Vielzahl von Bewegungsinformationenkandidaten in der Bewegungsinformationenkandidatenliste, ableitet; und
eine Prädiktionsblock-Erzeugungseinheit (2405), die einen Prädiktionsblock des gegenwärtigen Blocks durch Verwendung der Bewegungsinformation des gegenwärtigen Blocks erzeugt,
wobei die Einheit zum Ableiten umgekehrter Bewegungsinformationen konfiguriert ist zum:
Suchen (S1103) nach einem oder mehreren Blöcken mit Bewegungsinformation in mindestens einem Referenzbild des gegenwärtigen Bilds;
Skalieren (S1105) der Bewegungsinformation des einen oder der mehreren Blöcke in dem mindestens einen Referenzbild, das an das gegenwärtige Bild geleitet werden soll, um eine erste Bewegungsinformation zu erlangen;
Anwenden (S1107) eines entgegengesetzten Vorzeichens auf die erste Bewegungsinformation, um eine zweite Bewegungsinformation zu erlangen, wenn die erste Bewegungsinformation einen Bereich des gegenwärtigen Bilds spezifiziert;
Speichern der zweiten Bewegungsinformation in einem korrespondierenden Block korrespondierend mit dem Bereich des gegenwärtigen Bilds, wobei der korrespondierende Block in dem gegenwärtigen Bild angeordnet ist; und
Bestimmen der in dem korrespondierenden Block gespeicherten zweiten Bewegungsinformation, die mit dem gegenwärtigen Block überlappt, als die umgekehrte Bewegungsinformation des gegenwärtigen Blocks.

## Revendications

1. Procédé de traitement d'une image basé sur une prédiction inter, le procédé comprenant les étapes suivantes :
obtenir au moins une information de mouvement d'au moins un bloc correspondant situé dans une image courante ;
obtenir des informations de mouvement inverse d'un bloc courant en utilisant l'au moins une information de mouvement de l'au moins un bloc correspondant ;
ajouter les informations de mouvement inverse en tant que candidats d'informations de mouvement, à une liste de candidats d'informations de mouvement du bloc courant comprenant une pluralité de candidats d'informations de mouvement ;
dériver les informations de mouvement du bloc courant à partir des informations de mouvement sélectionnées parmi la pluralité de candidats d'informations de mouvement dans la liste de candidats d'informations de mouvement ; et
générer un bloc de prédiction du bloc courant en utilisant les informations de mouvement du bloc courant,
où l'obtention d'au moins une information de mouvement d'au moins un bloc correspondant comprend :
la recherche (S1103) d'un ou plusieurs blocs contenant des informations de mouvement dans au moins une image de référence de l'image courante ;
la mise à l'échelle (S1105) des informations de mouvement des un ou plusieurs blocs dans l'au moins une image de référence à diriger vers l'image courante pour obtenir des premières informations de mouvement ;
l'application (S1107) d'un signe opposé aux premières informations de mouvement pour obtenir des deuxièmes informations de mouvement lorsque les premières informations de mouvement spécifient une zone de l'image courante ; et
le stockage des deuxièmes informations de mouvement dans un bloc correspondant à la zone de l'image courante, le bloc correspondant étant situé dans l'image courante, et
où la dérivation des informations de mouvement inverse d'un bloc courant comprend :
la détermination des deuxièmes informations de mouvement stockées dans le bloc correspondant qui chevauche le bloc courant comme informations de mouvement inverse du bloc courant.

2. Procédé selon la revendication 1, dans lequel les informations de mouvement du bloc dans l'image de référence sont mises à l'échelle (S1105) sur la base d'une différence de compte d'ordre d'image, POC, entre l'image courante et l'image de référence et de la différence de POC entre l'image de référence et l'image de référence de l'image de référence.

3. Procédé selon la revendication 1, comprenant en outre l'étape suivante :
attribuer, lorsqu'une pluralité de deuxièmes informations de mouvement sont stockées dans un bloc correspondant unique, des ordres de priorité pour sélectionner une ou plusieurs informations de la pluralité de deuxièmes informations de mouvement en tant qu'informations de mouvement inverse du bloc courant, à la pluralité de deuxièmes informations de mouvement.

4. Procédé selon la revendication 3, dans lequel, lorsqu'une différence d'ordre d'image, POC, entre l'image courante et l'image de référence est faible, une priorité plus élevée est attribuée.

5. Procédé selon la revendication 3, dans lequel, lorsqu'une différence d'ordre d'image, POC, entre l'image courante et une première image de référence de l'image de référence est faible, la priorité la plus élevée est attribuée, la première image de référence de l'image de référence est une image à laquelle un premier bloc de l'image de référence se réfère par des informations de mouvement du premier bloc.

6. Procédé selon la revendication 3, dans lequel, lorsqu'une différence d'ordre d'image, POC, entre l'image courante et l'image de référence et la différence de POC entre l'image de référence et une première image de référence de l'image de référence ont le même signe, une priorité plus élevée est attribuée, la première image de référence de l'image de référence est une image à laquelle un premier bloc de l'image de référence se réfère par des informations de mouvement du premier bloc.

7. Procédé selon la revendication 3, dans lequel, lorsqu'une valeur de différence entre le bloc de l'image de référence et un premier bloc d'une première image de référence de l'image de référence spécifiée par le bloc de l'image de référence est faible, une priorité plus élevée est attribuée, la première image de référence de l'image de référence est une image à laquelle le bloc de l'image de référence se réfère par des informations de mouvement du bloc de l'image de référence.

8. Procédé selon la revendication 3, dans lequel une priorité plus élevée est attribuée aux deuxièmes informations de mouvement correspondant au bloc correspondant parmi la pluralité de deuxièmes informations de mouvement.

9. Procédé selon la revendication 1, comprenant en outre l'étape suivante :
attribuer, lorsqu'il y a une pluralité de blocs correspondants qui chevauchent le bloc courant dans l'image courante, un ordre de priorité pour sélectionner une ou plusieurs informations d'une pluralité de deuxièmes informations de mouvement de la pluralité de blocs correspondants comme informations de mouvement inverse du bloc courant, à la pluralité de deuxièmes informations de mouvement de la pluralité de blocs correspondants.

10. Procédé selon la revendication 9, dans lequel une priorité plus élevée est attribuée aux deuxièmes informations de mouvement d'un bloc correspondant qui existe à proximité d'une position d'un échantillon spécifique du bloc actuel parmi la pluralité de deuxièmes informations de mouvement.

11. Procédé selon la revendication 10, dans lequel l'échantillon spécifique est un échantillon quelconque parmi un échantillon supérieur gauche, un échantillon central et un échantillon inférieur droit du bloc courant.

12. Procédé selon la revendication 9, dans lequel une priorité plus élevée est attribuée aux deuxièmes informations de mouvement ayant une valeur différente des informations de mouvement d'un bloc voisin du bloc courant parmi la pluralité de deuxièmes informations de mouvement.

13. Procédé selon la revendication 1, dans lequel, lorsqu'il y a une pluralité d'informations de mouvement inverse du bloc en cours, un nombre prédéterminé d'informations de mouvement inverse sont ajoutées à la liste de candidats d'informations de mouvement du bloc courant sur la base d'un ordre de priorité attribué à la pluralité d'informations de mouvement inverse.

14. Procédé selon la revendication 1, dans lequel, lorsqu'une pluralité de deuxièmes informations de mouvement dérivées d'images de référence de différentes listes d'images de référence correspondent à un bloc correspondant unique, les informations de mouvement bidirectionnel dérivées de la pluralité de deuxièmes informations de mouvement sont stockées tout en étant mises en correspondance avec le bloc correspondant unique.

15. Appareil de traitement d'une image basé sur une prédiction inter, l'appareil comprenant :
une unité de dérivation d'informations de mouvement inverse (2401) pour obtenir au moins une information de mouvement d'au moins un bloc correspondant situé dans une image courante et dériver des informations de mouvement inverse d'un bloc courant en utilisant au moins une information de mouvement de l'au moins un bloc correspondant ;
une unité de configuration de liste de candidats d'informations de mouvement (2403) ajoutant les informations de mouvement inverse comme candidats d'informations de mouvement à une liste de candidats d'informations de mouvement du bloc courant comprenant une pluralité de candidats d'informations de mouvement ;
une unité de dérivation d'informations de mouvement (2404) dérivant des informations de mouvement du bloc courant à partir des informations de mouvement sélectionnées parmi la pluralité de candidats d'informations de mouvement dans la liste de candidats d'informations de mouvement ; et
une unité de génération de bloc de prédiction (2405) générant un bloc de prédiction du bloc courant en utilisant les informations de mouvement du bloc courant,
où l'unité de dérivation d'informations de mouvement inverse est configurée pour :
rechercher (S1103) d'un ou plusieurs blocs contenant des informations de mouvement dans au moins une image de référence de l'image courante ;
mettre à l'échelle (S1105) des informations de mouvement des un ou plusieurs blocs dans l'au moins une image de référence à diriger vers l'image courante pour obtenir les premières informations de mouvement ;
appliquer (S1107) un signe opposé aux premières informations de mouvement pour obtenir des deuxièmes informations de mouvement lorsque les premières informations de mouvement spécifient une zone de l'image courante ;
stocker les deuxièmes informations de mouvement dans un bloc correspondant à la zone de l'image courante, le bloc correspondant étant situé dans l'image courante ; et
déterminer les deuxièmes informations de mouvement stockées dans le bloc correspondant qui chevauche le bloc courant comme informations de mouvement inverse du bloc courant.
